(19) Europäisches Patentamt
European Patent Office
Office européen des brevets

(11) Veröffentlichungsnummer: **0 201 026**
**B1**

(12) **EUROPÄISCHE PATENTSCHRIFT**

(45) Veröffentlichungstag der Patentschrift: **13.09.89**

(51) Int. Cl.⁴: **C 09 B 45/24,** C 09 B 62/012, D 06 P 1/10, D 06 P 1/38

(21) Anmeldenummer: **86105857.6**

(22) Anmeldetag: **28.04.86**

(54) **Metallkomplex-Farbstoffe.**

(30) Priorität: **09.05.85 DE 3516667**

(43) Veröffentlichungstag der Anmeldung: **12.11.86 Patentblatt 86/46**

(45) Bekanntmachung des Hinweises auf die Patenterteilung: **13.09.89 Patentblatt 89/37**

(84) Benannte Vertragsstaaten: **CH DE FR GB LI**

(56) Entgegenhaltungen: **DE-A-2 533 958**

**Die Akte enthält technische Angaben, die nach dem Eingang der Anmeldung eingereicht wurden und die nicht in dieser Patentschrift enthalten sind.**

(73) Patentinhaber: **BAYER AG, D-5090 Leverkusen 1 Bayerwerk (DE)**

(72) Erfinder: **Henk, Hermann, Dr., Roggendorfstrasse 55, D-5000 Köln 80 (DE)**

**EP 0 201 026 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Gegenstand der vorliegenden Erfindung sind Farbstoffe, die in Form der freien Säure der Formel

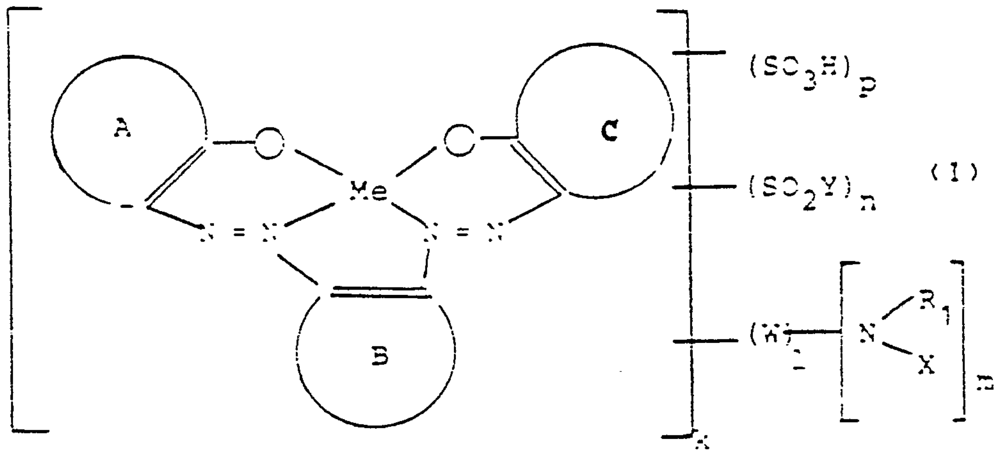

(I)

entsprechen, worin

A = Rest der Benzol- oder Naphthalinreihe
B = Rest der Benzolreihe der in p-Stellung zu den Azogruppen substituiert ist,
C = Rest einer phenolischen oder enolischen Kupplungskomponente, insbesondere einer solchen der Hydroxybenzol-, Hydroxynaphthalin-, Pyrazolon-, Pyridon-, Pyrimidon-, Chinolon- oder Acetessigarylidreihe.
W = direkte Bindung oder ein Brückenglied zu einem C-Atom der Benzol- oder Naphthalinkerne A, B oder C bzw. einem C-Atom eines aromatisch-heterocyclischen Ringes C,
$R_1$ = Wasserstoff oder gegebenenfalls substituiertes $C_1$-$C_4$-Alkyl
X = faserreaktiver Rest oder H
Y = Vinyl, β-Halogenvinyl oder $-O-CH_2-CH_2-Z$ worin
Z = Abgangsgruppe
k = 1 oder 2
l = 0 oder 1
p = 0 bis 4
m = 0, 1, 2 oder 3
n = 0, 1, 2, 3 oder 4
Me = Zweiwertiges Metallatom, insbesondere Cu und Ni

sowie Verfahren zu deren Herstellung und deren Verwendung zum Färben und Bedrucken von textilen und nichttextilen Materialien.

Geeignete Abgangsgruppen Z sind beispielsweise
$-O-SO_3H$, $-S-SO_3H$, $-O-PO_3H_2$, $-OCOCH_3$, Dialkylamino- und quartäre Ammoniumgruppen.

Unter den faserreaktiven Resten X werden solche verstanden, die eine oder mehrere reaktive Gruppen oder abspaltbare Substituenten aufweisen, welche beim Aufbringen der Farbstoffe auf Cellulosematerialien in Gegenwart säurebindender Mittel und gegebenenfalls unter Einwirkung von Wärme mit den Hydroxylgruppen der Cellulose oder beim Aufbringen auf Superpolyamidfasern, wie Wolle, mit den NH-Gruppen dieser Faser unter Ausbildung kovalenter Bindungen zu reagieren vermögen. Derartige Reaktivgruppen sind aus der Literatur in großer Zahl bekannt.

Als Substituenten kommen für gegebenenfalls substituiertes $C_1$-$C_4$-Alkyl vorzugsweise in Frage:
Halogen, Alkoxy ($C_1$-$C_4$), $SO_3H$, COOH, Hydroxy.

W steht bevorzugt für eine direkte Bindung zu einem C-Atom eines aromatisch-carbocyclischen oder aromatisch-heterocyclischen Ringes. Geeignete Brückenglieder W sind beispielsweise -CO-, $-SO_2-$, -NH-CO-NH-,

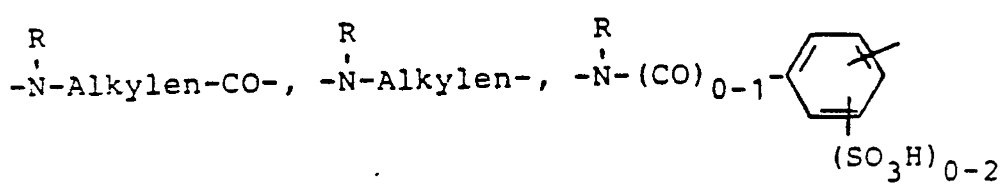

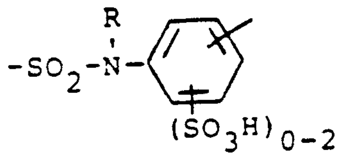
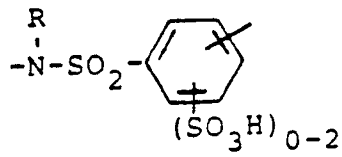

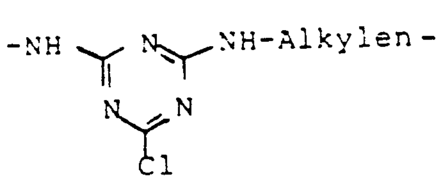
,
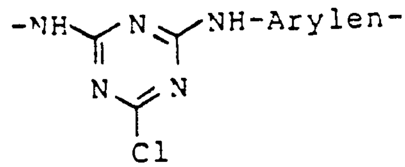

$-Arylen-(O)_{0-1}-Alkylen$,
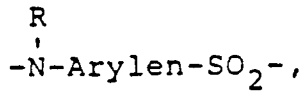

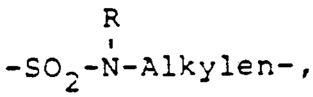
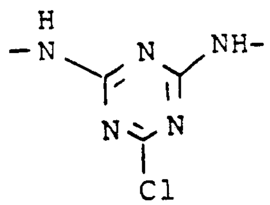
,
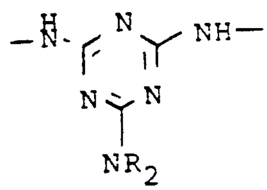

wobei

R bevorzugt = H oder $C_1$-$C_4$-Alkyl
Alkylen bevorzugt $C_2$-$C_5$-Alkylen und
Arylen bevorzugt gegebenenfalls substituiertes Phenyl bedeutet.

Als Substituenten kommen für gegebenenfalls substituiertes Phenyl vorzugsweise in Frage:
Alkyl ($C_1$-$C_4$), Alkoxy ($C_1$-$C_4$), Halogen, $SO_3H$, COOH, Hydroxy.

Erfindungsgemäß geeignete Reaktivgruppen, welche mindestens einen abspaltbaren Substituenten an einen heterocyclischen oder an einen aliphatischen Rest gebunden enthalten, sind u. a. solche, die mindestens einen reaktiven Substituenten an einen 5- oder 6-gliedrigen heterocyclischen Ring gebunden enthalten, wie an einen Monazin-, Diazin-, Triazin-, z. B. Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatische Ringe aufweist, wie ein Chinolin-, Phthalazin-, Cinnolin-, Chinazolin-, Chinoxalin-, Acridin-, Phenazin- und Phenanthridin-Ringsystem; die 5- oder 6-gliedrigen heterocyclischen Ringe, welche mindestens einen reaktiven Substituenten aufweisen, sind demnach bevorzugt solche, die ein oder mehrere Stickstoffatome enthalten und 5- oder bevorzugt 6-gliedrige carbocyclische Ringe ankondensiert enthalten können.

Unter den reaktiven Substituenten am Heterocyclus sind beispielsweise zu erwähnen:

Halogen (Cl, Br oder F), Ammonium, einschließlich Hydrazinium, Sulfonium, Sulfonyl, Azido-($N_3$), Rhodanido, Thio, Thiolether, Oxyether, Sulfinsäure und Sulfonsäure. Im einzelnen sind beispielsweise zu nennen:

Mono- oder Dihalogen-symmetrische-triazinylreste, z. B.
2,4-Dichlortriazinyl-6-,
2-Amino-4-chlortriazinyl-6-,
2-Alkylamino-4-chlortriazinyl-6-, wie
2-Methylamino-4-chlortriazinyl-6-,
2-Ethylamino- oder 2-Propylamino-4-chlortriazinyl-6-,
2-β-Oxethylamino-4-chlortriazinyl-6-,
2-Di-β-oxethylamino-4-chlortriazinyl-6- und die entsprechenden Schwefelsäurehalbester,
2-Diethylamino-4-chlortriazinyl-6-,
2-Morpholino- oder 2-Piperidino-4-chlortriazinyl-6-,
2-Cyclohexylamino-4-chlortriazinyl-6-,
2-Arylamino- und substituiertes Arylamino-4-chlor-triazinyl-6-, wie
2-Phenylamino-4-chlortriazinyl-6-,
2-(o-, m- oder p-Carboxy- oder Sulfophenyl)-amino-4-chlortriazinyl-6-,
2-Alkoxy-4-chlortriazinyl-6-, wie 2-Methoxy- oder Ethoxy-4-chlortriazinyl-6-,

2-(Phenylsulfonylmethoxy)-4-chlortriazinyl-6-,
2-Aryloxy und substituiertes Aryloxy-4-chlortriazinyl-6-, wie
2-Phenoxy-4-chlortriazinyl-6-,
2-(p-Sulfophenyl)-oxy-4-chlortriazinyl-6-,
2-(o-, m- oder p-Methyl- oder Methoxyphenyl)-oxy-4-chlor-triazinyl-6-,
2-Alkylmercapto- oder 2-Arylmercapto- oder 2-(substituiertes Aryl)-mercapto-4-chlortriazinyl-6-, wie
2-β-Hydroxyethylmercapto-4-chlortriazinyl-6-,
2-Phenylmercapto-4-chlortriazinyl-6-,
2-(4'-Methylphenyl)-mercapto-4-chlortriazinyl-6-,
2-(2',4'-Dinitro-phenyl)-mercapto-4-chlortriazinyl-6-,
2-Methyl-4-chlor-triazinyl-6-,
2-Phenyl-4-chlor-triazinyl-6-,
2,4-Difluortriazinyl-6,

Monofluortriazinylreste, die durch Amino-, Alkylamino-, Aralkylamino, Acylaminogruppen substituiert sind, wobei Alkyl, insbesondere gegebenenfalls substituiertes $C_1$-$C_4$-Alkyl, Aralkyl, insbesondere gegebenenfalls substituiertes Phenyl-, $C_1$-$C_4$-Alkyl und Aryl, insbesondere gegebenenfalls durch Sulfo-, Alkyl-, insbesondere $C_1$-$C_4$-Alkyl, Alkoxy, insbesondere $C_1$-$C_4$-Alkoxy-, Carbonsäure-, Acylaminogruppen und Halogenatome wie Fluor, Chlor oder Brom substituiertes Phenyl oder Naphthyl bedeutet, beispielsweise
2-Amino-4-fluor-triazinyl-6,
2-Methylamino-4-fluor-triazinyl-6,
2-Ethylamino-4-fluor-triazinyl-6,
2-iso-Propylamino-4-fluor-triazinyl-6,
2-Dimethylamino-4-fluor-triazinyl-6,
2-Diethylamino-4-fluor-triazinyl-6,
2-β-Methoxy-ethylamino-4-fluor-triazinyl-6,
2-β-Hydroxyethylamino-4-fluor-triazinyl-6,
2-Di-β-hydroxyethylamino)-4-fluor-triazinyl-6,
2-β-Sulfoethylamino-4-fluor-triazinyl-6,
2-β-Sulfoethyl-methylamino-4-fluor-triazinyl-6,
2-Carboxymethylamino-4-fluor-triazinyl-6,
2-β-Cyanethylamino-4-fluor-triazinyl-6,
2-Benzylamino-4-fluor-triazinyl-6,
2-β-Phenylethylamino-4-fluor-triazinyl-6,
2-Benzyl-methylamino-4-fluor-triazinyl-6,
2-(x-Sulfo-benzyl)-amino-4-fluor-triazinyl-6,
2-Cyclohexylamino-4-fluor-triazinyl-6,
2-(o-, m-, p-Methylphenyl)-amino-4-fluor-triazinyl-6,
2-(o-, m-, p-Sulfophenyl)-amino-4-fluor-triazinyl-6,
2-(2',5'-Disulfophenyl)-amino-4-fluor-triazinyl-6,
2-(o-, m-, p-Chlorphenyl)-amino-4-fluor-triazinyl-6,
2-(o-, m-, p-Methoxyphenyl)-4-fluor-triazinyl-6,
2-(2'-Methyl-4'-sulfophenyl)-amino-4-fluor-triazinyl-6,
2-(2'-Methyl-5'-sulfophenyl)-amino-4-fluor-triazinyl-6,
2-(2'-Chlor-4'-sulfophenyl)-amino-4-fluor-triazinyl-6,
2-(2'-Chlor-5'-sulfophenyl)-amino-4-fluor-triazinyl-6,
2-(2'-Methoxy-4'-sulfophenyl)-amino-4-fluor-triazinyl-6,
2-(o-, m-, p-Carboxyphenyl)-amino-4-fluor-triazinyl-6,
2-(2',4'-Disulfophenyl)-amino-4-fluor-triazinyl-6,
2-(3',5'-Disulfophenyl)-amino-4-fluor-triazinyl-6,
2-(2'-Carboxy-4'-sulfophenyl)-amino-4-fluor-triazinyl-6,
2-(6'-Sulfonaphthyl-(2'))-amino-4-fluor-triazinyl-6,
2-(4',8'-Disulfonaphthyl-(2'))-amino-4-fluor-triazinyl-6,
2-(6',8'-Disulfonaphthyl-(2'))-amino-4-fluor-triazinyl-6,
2-(N-Methylphenyl)-amino-4-fluor-triazinyl-6,
2-(N-Ethylphenyl)-amino-4-fluor-triazinyl-6,
2-(N-β-Hydroxyethylphenyl)-amino-4-fluor-triazinyl-6,
2-(N-iso-Propylphenyl)-amino-4-fluor-triazinyl-6,
2-Morpholino-4-fluor-triazinyl-6,
2-Piperidino-4-fluor-triazinyl-6,
2-(4',6',8'-Trisulfonaphthyl-(2'))-4-fluor-triazinyl-6,
2-(3',6',8'-Trisulfonaphthyl-(2'))-4-fluor-triazinyl-6,
2-(3',6'-Disulfonaphthyl-(1'))-4-fluor-triazinyl-6,

Mono-, Di- oder Trihalogenpyrimidinylreste, wie

2,4-Dichlorpyrimidinyl-6-,
2,4,5-Trichlorpyrimidinyl-6-,
2,4-Dichlor-5-nitro- oder -5-methyl- oder -5-carboxymethyl- oder -5-carboxy- oder -5-cyano- oder -5-vinyl- oder -5-sulfo- oder -5-mono-, -di- oder -trichlormethyl- oder -5-carboalkoxy-pyrimidinyl-6-,
2,6-Dichlorpyrimidin-4-carbonyl-,
2,4-Dichlorpyrimidin-5-carbonyl-,
2-Chlor-4-methylpyrimidin-5-carbonyl,
2-Methyl-4-chlorpyrimidin-5-carbonyl-,
2-Methylthio-4-fluorpyrimidin-5-carbonyl-,
6-Methyl-2,4-dichlorpyrimidin-5-carbonyl-,
2,4,6-Trichlorpyrimidin-5-carbonyl-,
2,4-Dichlorpyrimidin-5-sulfonyl-,
2-Chlorchinoxalin-3-carbonyl-,
2- oder 3-Monochlorchinoxalin-6-carbonyl-,
2- oder 3-Monochlorchinoxalin-6-sulfonyl-,
2,3-Dichlorchinoxalin-6-carbonyl-,
2,3-Dichlorchinoxalin-6-sulfonyl-,
1,4-Dichlorphthalazin-6-sulfonyl- oder -6- carbonyl-,
2,4-Dichlorchinazolin-7- oder -6-sulfonyl- oder -carbonyl-,
2- oder 3- oder 4-(4',5'-Dichlorpyridazon-6'-yl-1')-phenylsulfonyl- oder carbonyl-,
β-(4',5'-Dichlorpyridazon-6'-yl-1')-ethylcarbonyl-,
N-Methyl-N-(2,4-Dichlortriazinyl-6-)-carbamyl-,
N-Methyl-N-(2-methylamino-4-chlortriazinyl-6)-carbamyl-,
N-Methyl-N-(2-dimethylamino-4-chlortriazinyl-6)-carbamyl-,
N-Methyl- oder N-Ethyl-N-(2,4-dichlortriazinyl-6)-aminoacetyl-,
N-Methyl-N-(2,3-dichlorchinoxalin-6-sulfonyl)-aminoacetyl-,
N-Methyl-N-(2,3-dichlorchinoxalin-6-carbonyl)-aminoacetyl-,

sowie die entsprechenden Brom- und Fluor-Derivate der oben erwähnten chlorsubstituierten heterocyclischen Reste, unter diesen beispielsweise
2-Fluor-4-pyrimidinyl-,
2,6-Difluor-4-pyrimidinyl-,
2,6-Difluor-5-chlor-4-pyrimidinyl,
2-Fluor-5,6-dichlor-4-pyrimidinyl-,
2,6-Difluor-5-methyl-4-pyrimidinyl-,
2-Fluor-5-methyl-6-chlor-4-pyrimidinyl-,
2-Fluor-5-nitro-6-chlor-4-pyrimidinyl-,
5-Brom-2-fluor-4-pyrimidinyl-,
2-Fluor-5-cyan-4-pyrimidinyl-,
2-Fluor-5-methyl-4-pyrimidinyl-,
2,5,6-Trifluor-4-pyrimidinyl-,
5-Chlor-6-chlormethyl-2-fluor-4-pyrimidinyl-,
2,6-Difluor-5-brom-4-pyrimidinyl-,
2-Fluor-5-brom-6-methyl-4-pyrimidinyl-,
2-Fluor-5-brom-6-chlormethyl-4-pyrimidinyl-,
2,6-Difluor-5-chlormethyl-4-pyrimidinyl-,
2,6-Difluor-5-nitro-4-pyrimidinyl-,
2-Fluor-6-methyl-4-pyrimidinyl-,
2-Fluor-5-chlor-6-methyl-4-pyrimidinyl-,
2-Fluor-5-chlor-4-pyrimidinyl-,
2-Fluor-6-chlor-4-pyrimidinyl-,
6-Trifluormethyl-5-chlor-2-fluor-4-pyrimidinyl-,
6-Trifluormethyl-2-fluor-4-pyrimidinyl-,
2-Fluor-5-nitro-4-pyrimidinyl-,
2-Fluor-5-trifluormethyl-4-pyrimidinyl-,
2-Fluor-5-phenyl- oder -5-methylsulfonyl-4-pyrimidinyl-,
2-Fluor-5-carbonamido-4-pyrimidinyl-,
2-Fluor-5-carbomethoxy-4-pyrimidinyl-,
2-Fluor-5-brom-6-trifluormethyl-4-pyrimidinyl-,
2-Fluor-6-carbonamido-4-pyrimidinyl-,
2-Fluor-6-carbomethoxy-4-pyrimidinyl-,
2-Fluor-6-phenyl-4-pyrimidinyl-,
2-Fluor-6-cyan-4-pyrimidinyl-,
2,6-Difluor-5-methylsulfonyl-4-pyrimidinyl-,
2-Fluor-5-sulfonamido-4-pyrimidinyl-,

2-Fluor-5-chlor-6-carbomethoxy-4-pyrimidinyl,
2,6-Difluor-5-trifluormethyl-4-pyrimidinyl;

sulfonylgruppenhaltige Triazinreste, wie
2,4-Bis-(phenylsulfonyl)-triazinyl-6-,
2-(3'-Carboxyphenyl)-sulfonyl-4-chlortriazinyl-6-,
2-(3'-Sulfophenyl)-sulfonyl-4-chlortriazinyl-6-,
2,4-Bis-(3'-carboxyphenylsulfonyl)-triazinyl-6;

sulfonylgruppenhaltige Pyrimidinringe, wie
2-Carboxymethylsulfonyl-pyrimidinyl-4-,
2-Methylsulfonyl-6-methyl-pyrimidinyl-4-,
2-Methylsulfonyl-6-ethylpyrimidinyl-4-,
2-Phenylsulfonyl-5-chlor-6-methyl-pyrimidinyl-4-,
2,6-Bis-methylsulfonyl-pyrimidinyl-4-,
2,6-Bis-methylsulfonyl-5-chlor-pyrimidinyl-4-,
2,4-Bis-methylsulfonyl-pyrimidin-5-sulfonyl-,
2-Methylsulfonyl-pyrimidinyl-4,
2-Phenylsulfonyl-pyrimidinyl-4-,
2-Trichlormethylsulfonyl-6-methyl-pyrimidinyl-4-,
2-Methylsulfonyl-5-chlor-6-methyl-pyrimidinyl-4-,
2-Methylsulfonyl-5-brom-6-methyl-pyrimidinyl-4-,
2-Methylsulfonyl-5-chlor-6-ethyl-pyrimidinyl-4-,
2-Methylsulfonyl-5-chlor-6-chlormethyl-pyrimidinyl-4-,
2-Methylsulfonyl-4-chlor-6-methyl-pyrimidin-5-sulfonyl-,
2-Methylsulfonyl-5-nitro-6-methyl-pyrimidinyl-4-,
2,5,6-Tris-methylsulfonyl-pyrimidinyl-4-,
2-Methylsulfonyl-5,6-dimethyl-pyrimidinyl-4-,
2-Ethylsulfonyl-5-chlor-6-methyl-pyrimidinyl-4-,
2-Methylsulfonyl-6-chlor-pyrimidinyl-4-,
2,6-Bis-methylsulfonyl-5-chlor-pyrimidinyl-4-,
2-Methylsulfonyl-6-carboxy-pyrimidinyl-4-,
2-Methylsulfonyl-5-sulfo-pyrimidinyl-4-,
2-Methylsulfonyl-6-carbomethoxy-pyrimidinyl-4-,
2-Methylsulfonyl-5-carboxy-pyrimidinyl-4-,
2-Methylsulfonyl-5-cyan-6-methoxy-pyrimidinyl-4-,
2-Methylsulfonyl-5-chlorpyrimidinyl-4-,
2-Sulfoethylsulfonyl-6-methyl-pyrimidinyl-4-,
2-Methylsulfonyl-5-brom-pyrimidinyl-4-,
2-Phenylsulfonyl-5-chlor-pyrimidinyl-4-,
2-Carboxymethylsulfonyl-5-chlor-6-methyl-pyrimidinyl-4-,
2-Methylsulfonyl-6-chlorpyrimidin-4- und -5-carbonyl-,
2,6-Bis-(methylsulfonyl)-pyrimidin-4- oder -5-carbonyl-,
2-Ethylsulfonyl-6-chlorpyrimidin-5-carbonyl-,
2,4-Bis-(methylsulfonyl)-pyrimidin-5-sulfonyl-,
2-Methylsulfonyl-4-chlor-6-methyl-pyrimidin-5-sulfonyl- oder -carbonyl-;

ammoniumgruppenhaltige Triazinringe, wie
2-Trimethylammonium-4-phenylamino- oder -4-(o-, m- oder p-sulfophenyl)-aminotriazinyl-6-,
2-(1,1-Dimethylhydrazinium)-4-phenylamino- oder -4-(o-, m- oder p-sulfophenyl)-aminotriazinyl-6-,
2-(2-Isopropyliden-1,1-dimethyl)-hydrazinium-4-phenylamino- oder -4-(o-, m- oder p-sulfophenyl)-aminotriazinyl-6-,
2-N-Aminopyrrolidinium- oder 2-N-Aminopiperidinium-4-phenylamino- oder -4-(o-, m- oder p-sulfophenyl)-aminotriazinyl-6-,

ferner 4-Phenylamino- oder 4-(sulfophenylamino)-triazinyl-6-Reste, die in 2-Stellung über eine Stickstoffbindung das 1,4-Bis-aza-bicyclo-[2,2,2]-octan oder das 1,2-Bis-aza-bicyclo-[0,3,3]-octan quartär gebunden enthalten,

2-Pyridinium-4-phenylamino- oder -4-(o-, m- oder p-sulfophenyl)-aminotriazinyl-6- sowie entsprechende 2-Oniumtriazinyl-6-Reste, die in 4-Stellung durch Alkylamino-, wie Methylamino-, Ethylamino- oder β-Hydroxyethylamino-, oder Alkoxy-, wie Methoxy- oder Alkoxy-, oder Aroxy-, wie Phenoxy- oder Sulfophenoxy-Gruppen substituiert sind;
2-Chlorbenzthiazol-5- oder -6-carbonyl- oder -5- oder -6-sulfonyl-,
2-Arylsulfonyl- oder -Alkylsulfonylbenzthiazol-5- oder -6-carbonyl- oder -5- oder -6-sulfonyl-, wie

2-Methylsulfonyl- oder 2-Ethylsulfonylbenzthiazol-5-oder -6-sulfonyl- oder -carbonyl-, 2-Phenylsulfonylbenzthiazol-5- oder -6-sulfonyl- oder carbonyl-
und die entsprechenden im ankondensierten Benzolring Sulfogruppen enthaltenden 2-Sulfonylbenzthiazol-5- oder -6-carbonyl- oder -sulfonyl-Derivate,
2-Chlorbenzoxazol-5- oder -6-carbonyl- oder -sulfonyl-,
2-Chlorbenzimidazol-5- oder -6-carbonyl- oder -sulfonyl-,
2-Chlor-1-methylbenzimidazol-5- oder -6-carbonyl- oder -sulfonyl-,
2-Chlor-4-methylthiazol-(1,3)-5-carbonyl- oder -4- oder -5-sulfonyl-,
N-Oxid des 4-Chlor- oder 4-Nitrochinolin-5-carbonyl.

Desweiteren sind Reaktivgruppen der aliphatischen Reihe zu nennen, wie
Acryloyl-,
Mono-, Di- oder Trichloracryloyl-, wie
$-CO-CH=CH-Cl$,
$-CO-CCl=CH_2$,
$-CO-CCl=CH-CH_3$,
ferner
$-CO-CCl=CH-COOH$,
$-CO-CH=CCl-COOH$,
β-Chlorpropionyl-,
3-Phenylsulfonylpropionyl-,
3-Methylsulfonylpropionyl-,
β-Sulfato-ethylaminosulfonyl-,
Vinylsulfonyl-,
β-Chlorethylsulfonyl-,
β-Sulfatoethylsulfonyl-,
β-Methylsulfonylethylsulfonyl-,
β-Phenylsulfonylethylsulfonyl-,
2-Fluor-2-chlor-3,3-difluorcyclobutan-1-carbonyl-,
2,2,3,3-Tetrafluorcyclobutan-carbonyl-1- oder sulfonyl-1-,
β-(2,2,3,3-Tetrafluorcyclobutyl-1)-acryloyl-,
α- oder β-Bromacryloyl-,
α- oder β-Alkyl- oder Arylsulfonylacryloyl-Gruppe, wie
α- oder β-Methylsulfonylacryloyl.
Bevorzugt sind Farbstoffe der allgemeinen Formel

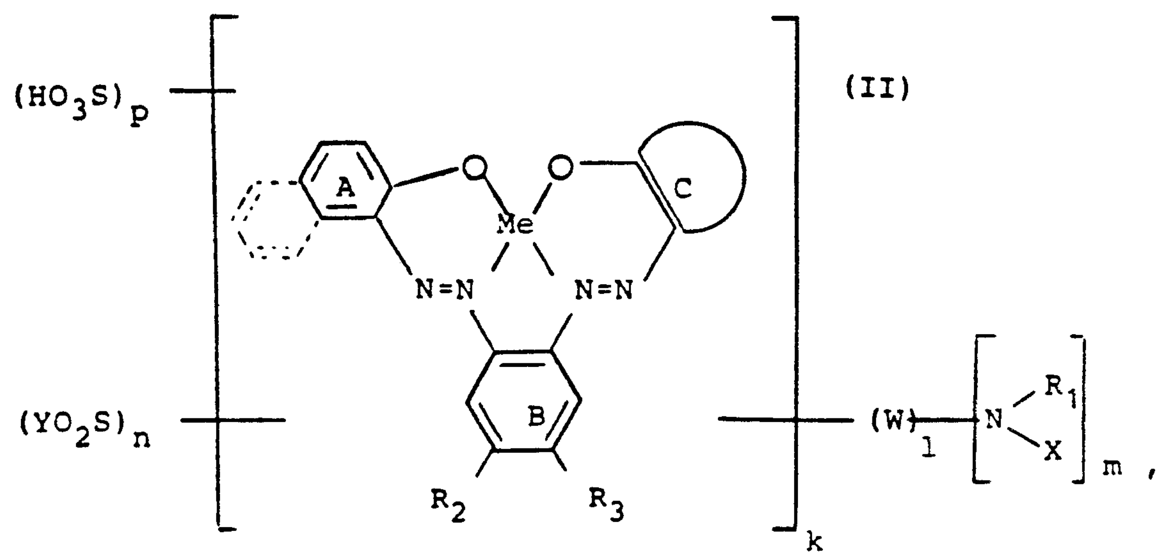

(II)

worin

A und C gegebenenfalls weitere Substituenten aufweisen können,
$R_2 = C_1$-$C_4$-Alkyl, Halogen, insbesondere Chlor, $C_1$-$C_4$-Alkoxy, $C_1$-$C_4$-Alkylcarbonylamino, Arylcarbonylamino, Aralkylcarbonylamino,
$R_3 = C_1$-$C_4$-Alkoxy,
oder
$R_2$ und $R_3$ einen Ring bilden und folgende Bedeutung haben:

$$R_2 + R_3 = \overset{/}{N}H-CO-CH_2-\overset{\backslash}{O},$$

,

$$\overset{/}{O}-CH_2-CH_2-\overset{\backslash}{O}$$

und

Y, C, W, $R_1$, X, k, l, m, n, p und Me die oben angegebene Bedeutung haben und die Alkyl-, Alkoxy-, Aryl- und Aralkylreste übliche Substituenten aufweisen können.

Bevorzugt sind ferner von wasserlöslichmachenden Gruppen freie Farbstoffe der allgemeinen Formel II, worin

l, m, n, p = 0
k = 1,

die insbesondere als Pigmente geeignet sind.

Bevorzugt sind auch Farbstoffe der allgemeinen Formel II worin

l, m, n = 0
k = 1
p = 1 - 3

und die insbesondere als Woll-, Polyamid- und Lederfarbstoffe Verwendung finden (in Form der Alkalisalze) oder als Pigmente (in Form der Erdalkalisalze) oder als Solventfarbstoffe (in Form der Aminsalze).

Bevorzugt sind auch Farbstoffe der allgemeinen Formel II worin

l, m, p = 0
k = 1
n = 1 oder 2, worin
Y = $CH_2$-$CH_2Z$
Z = -O-$SO_3H$, -S-$SO_3H$, -O-$PO_3H_2$,

die als Reaktivfarbstoffe für Wolle, Polyamid und Baumwolle geeignet sind.

Bevorzugt sind auch Farbstoffe der allgemeinen Formel II worin

m, n = 0
l = 1
k = 2 und
p = 2 bis 8

die als Direkt-Farbstoffe geeignet sind.

Besonders bevorzugt sind Reaktiv-Farbstoffe der allgemeinen Formel

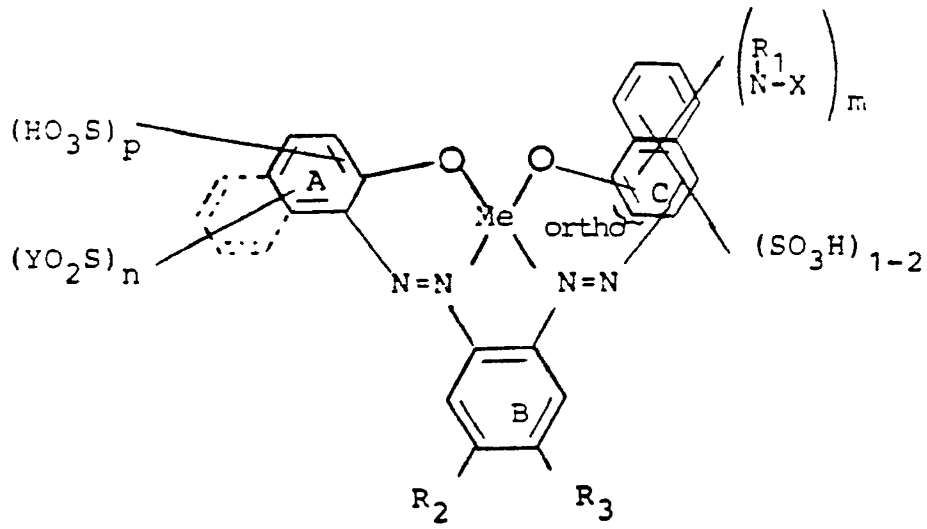

(III)

worin

Y, n, $R_2$, $R_3$, $R_1$, X, m, p und Me die obengenannte Bedeutung haben.

Besonders bevorzugt sind ferner Reaktiv-Farbstoffe der allgemeinen Formel III worin

$R_2$ und $R_3$ = $C_1$-$C_4$-Alkoxy
$R_1$ = H und
Y, n, X, m, Me die obengenannte Bedeutung haben.

Besonders bevorzugt sind Reaktivfarbstoffe der Formel

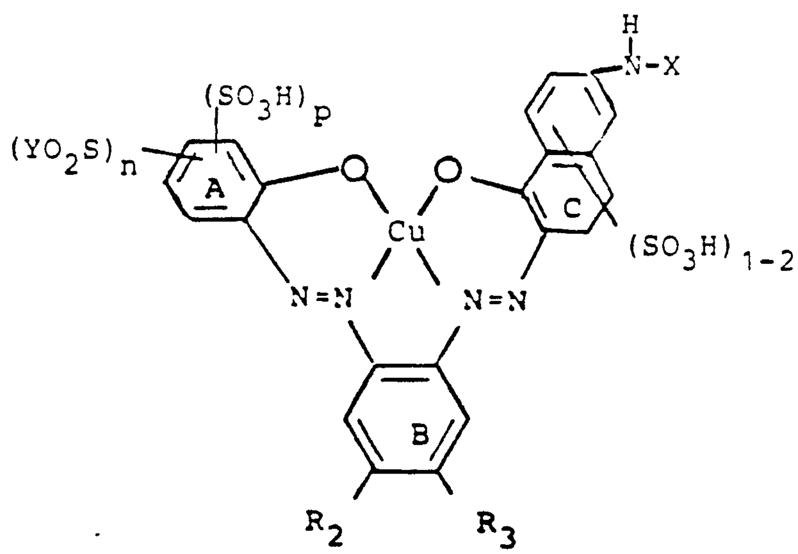

(IV)

worin

$R_2$, $R_3$, X, Y, n und p die obengenannte Bedeutung haben.
$R_2$ und $R_3$ stehen ganz generell bevorzugt für $OCH_3$.

Die Alkyl-, Alkoxy-, Aralkyl- und Arylgruppen können übliche Substituenten aufweisen.

Die Herstellung der Farbstoffe der allgemeinen Formel kann auf unterschiedlichen Wegen geschehen. Entweder werden

a) ortho Hydroxy-Amino-Derivate der allgemeinen Formel

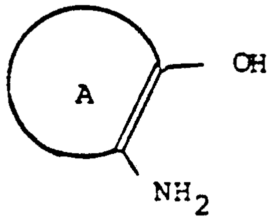

(V)

oder

b) ortho Halogen Amino-Derivate der allgemeinen Formel

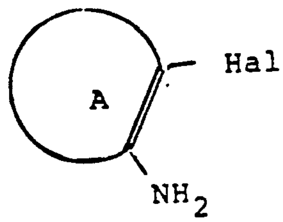

(VI)

oder

c) ortho-Alkoxy-Amino-Derivate bzw. ortho-Alkyl- oder Aryl-sulfonyloxy-Amino-Derivate der allgemeinen Formel

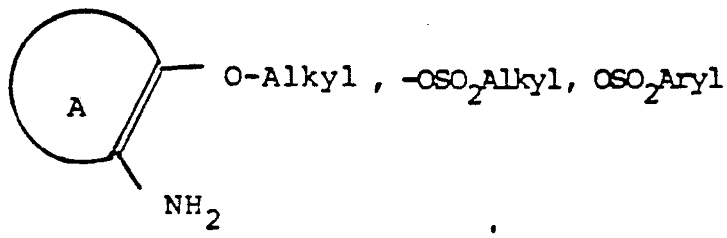

(VII)

diazotiert und auf ein 3,4-disubstituiertes Anilinderivat der allgemeinen Formel

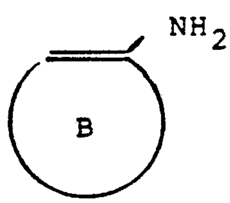

(VIII)

in bekannter Weise, z. B. in wässrigem Medium orthoständig zur Aminogruppe gekuppelt zu einem O-Aminoazofarbstoff der allgemeinen Formel IX

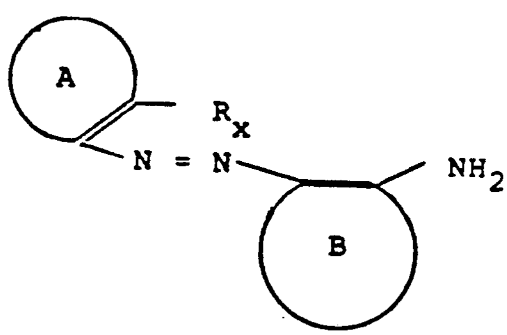

IX a): $R_x$ = OH
IX b): $R_x$ = Halogen
IX c): $R_x$ = O-Alkyl, O-$SO_2$-Alkyl, O-$SO_2$-Aryl

Dieser wird nach üblichen Verfahren weiter diazotiert und auf ein "Enol" der allgemeinen Formel gekuppelt

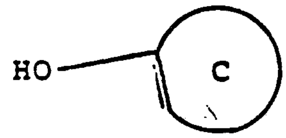

(X)

zu einem ortho Disazofarbstoff der allgemeinen Formel XI

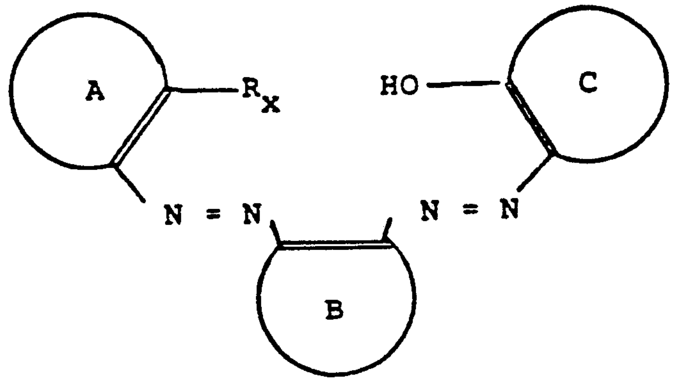

XI a): $R_x$ = OH
XI b): $R_x$ = Halogen
XI c): $R_x$ = O-Alkyl, O-$SO_2$-Alkyl, O-$SO_2$-Aryl

Die Metallisierung zu Chromophoren der allgemeinen Formel

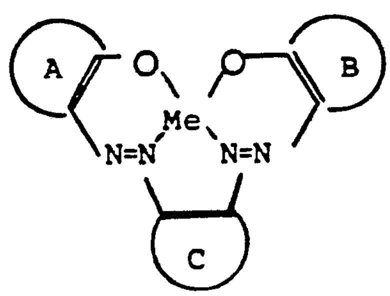

(XII)

erfolgt
bei XIa) durch Zugabe von metallabgebenden Mitteln,
bei XIb) durch Enthalogenierung mit metallabgebenden Mitteln bei erhöhter Temperatur, und
bei XIc) durch Entalkylierung bzw. Verseifung mit metallabgebenden Mitteln bei erhöhter Temperatur.

Die Herstellung von Reaktivfarbstoffen erfolgt entweder durch Umsetzung aminogruppenhaltiger Farbstoffe der allgemeinen Formel

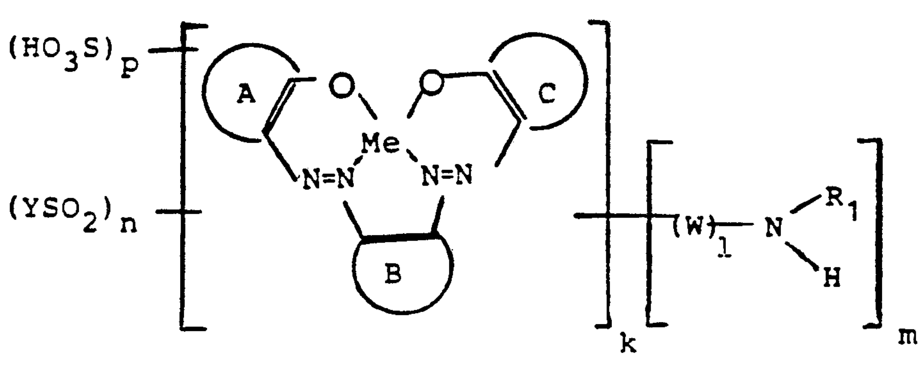

(XIII)

mit Verbindungen vom Typ: X-Halogen zu Farbstoffen der allgemeinen Formel I und/oder durch Einführung der Abgangsgruppe Z in der allgemeinen Formel I, worin

$Y = CH_2\text{-}CH_2\text{-}Z$ ist,
n = 1 und
m = 0 oder 1 ist.

Geeignete Verbindungen der allgemeinen Formel V sind z. B.

2 Aminophenol, sowie alle durch Halogen-, Nitro-, Alkyl-, Alkoxy-, Carboxy-, Sulfo-, β-Hydroxyethylsulfonyl- und Acylamino substituierten 2-Aminophenole, ortho-Amino-Naphthole sowie deren Sulfonsäuren.

Geeignete Verbindungen der allgemeinen Formel VI sind z. B.

2-Halogenaniline sowie alle durch weiteres Halogen-, Nitro-, Alkyl-, Alkoxy-, Carboxy-, Sulfo-, β-Hydroxyethylsulfonyl und Acylamino substituierten 2 Halogenaniline, ortho-Halogen-Naphthylamine sowie deren Sulfonsäuren.

Geeignete Verbindungen der allgemeinen Formel VII sind z. B.

2-Alkoxyaniline, 2-Alkylsulfonyloxy-aniline, 2-Arylsulfonyloxy-aniline sowie alle durch Halogen-, Nitro-, Alkyl-, Alkoxy-, Carboxy-, Sulfo-, β-Hydroxyethylsulfonyl- und Acylamino substituierten 2-Alkoxyaniline, 2-Alkylsulfonyloxy-anilin, 2-Arylsulfonyloxy-aniline, ortho-Alkoxy- Naphthylamine sowie deren Sulfonsäuren.

Geeignete Verbindungen der allgemeinen Formel VIII sind z. B.

3-Methoxy-4-Methylanilin,
3-Methoxy-4-chlor- oder brom-anilin,
3,4-Dimethoxyanilin,
3,4-Diethoxyanilin,
3,4-Diisopropoxyanilin,
3-Methoxy-4-acetylaminoanilin,
3-Methoxy-4-oxalylaminoanilin,
3-Methoxy-4-benzoylaminoanilin,
ferner

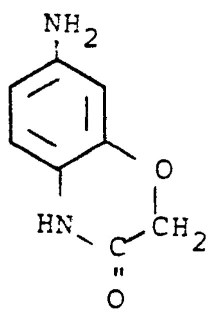

und

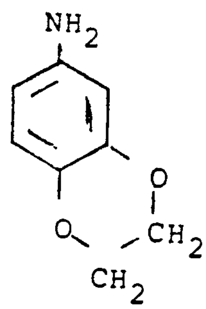

Geeignete Verbindungen der allgemeinen Formel X sind beispielsweise para-substituierte Phenole, die orthständig zur OH-Gruppe kuppeln, 1-H, Alkyl-, Carbamoyl oder Aryl-3-Methyl- oder Carboxy-Pyrazolone (5) sowie alle durch Halogen-, Nitro-, Amino-, Alkyl-, Alkoxy-, Carboxy-, Sulfo-, β-Hydroxyethylsulfonyl- und Acylamino-substituierten 1-Phenyl-3-Methyl- oder 3-Carboxy-Pyrazolone (5), 1,4-Dialkyl-2-Hydroxy-pyridone (6) sowie alle durch -CN, $-CONH_2$, $-CH_2\text{-}SO_3H$, $-SO_3H$ in 3-Stellung substituierten 1,4-Dialkyl-2-Hydroxy-pyridone (6), Citrazinsäure, Barbitursäure, Acetessigarylide sowie alle durch Alkyl-, Alkoxy-, Halogen, Carboxy-, Sulfo-, β-Hydroxyethylsulfonyl- und Acylamino-substituierten Acetessigarylide, Naphthole sowie deren mono-, di- und tri-Sulfonsäuren, Aminonaphthole sowie deren mono- und di-Sulfonsäuren, Dihydroxychinolin.

Acylamino steht ganz generell bevorzugt für $C_1\text{-}C_4$-Alkylcarbonylamino, gegebenenfalls substituiertes Phenylcarbonylamino, Alkyl bevorzugt für gegebenenfalls substituiertes $C_1\text{-}C_4$-Alkyl, Alkoxy bevorzugt für gegebenenfalls substituiertes $C_1\text{-}C_4$-Alkoxy und Aryl bevorzugt für gegebenenfalls substituiertes Phenyl.

Die neuen Farbstoffe der Formel I finden Verwendung:
als Pigmente, wenn
p, n, m, l = 0 und K = 1 und A, B und C keine wasserlöslichmachenden Gruppen aufweisen,
als Woll-, Polyamid- und Lederfarbstoffe, wenn
n, m, l = 0, K = 1 und p = 1 - 3 ist, in Form ihrer Alkalisalze,
als Pigmente, wenn
n, m, l = 0, K = 1 und p = 1 - 3 ist, in Form ihrer Erdalkalisalze,
als Solventfarbstoffe, wenn
n, m, l = 0, K = 1 und p = 1 - 3 ist, in Form ihrer Aminsalze,
als Reaktivfarbstoffe für Wolle, Polyamid und Baumwolle, wenn
l, m, p = 0, K = 1, n = 1 oder 2,
worin $Y = CH_2\text{-}CH_2Z$ und $Z = -O\text{-}SO_3H$, $-S\text{-}SO_3H$, $-O\text{-}PO_3H_2$ ist,
als Direktfarbstoffe, wenn
m, n = 0, l = 1, K = 2 und p = 2 - 8 ist,
als Reaktivfarbstoffe für Baumwolle, wenn

K, m = 1, l = 0 oder 1, p = 0 bis 3 und/oder n = 0 oder 1 ist.

Die erhaltenen Farbungen, insbesondere solche auf Baumwolle oder Zellwolle, zeichnen sich durch gute Echtheitseigenschaften aus, insbesondere sehr gute Naß-, Licht- und Chlorechtheit.

In der DE-OS-2 533 958 werden wasserunlösliche Metallkomplexfarbstoffe mit Arylen-1,2-azo-azomethinstruktur beschrieben.

**Beispiel 1**

20,3 g 3-Amino-4-methoxybenzolsulfonsäure werden in ca. 100 ml Wasser neutral gelöst, mit Eis gekühlt, unter Rühren mit 30 ml 30-%-iger Salzsäure versetzt und mit 70 ml 10-%-iger Nitritlösung diazotiert. Der Nitroüberschuß wird nach 15 Minuten mit wenig Amidosulfonsäure zerstört. 15,3 g 3,4-Dimethoxyanilin werden als Feststoff in die Diazotierung eingestreut. Anschließend wird der pH-Wert mit 20-%-iger Sodalösung über einen Zeitraum von mehreren Stunden auf pH ⩽ 4 angehoben. Die Kupplung ist rasch beendet, der ausgefallene Farbstoff wird abgesaugt. Man erhält ca. 80 g Paste eines ortho-Aminoazofarbstoffs, welcher in Form der freien Säure der folgenden Formel entspricht.

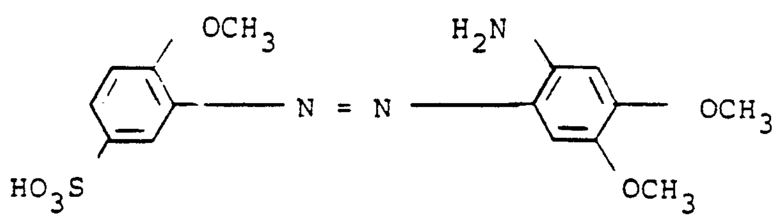

$\lambda_{max}$ = 340
= 480

**Beispiel 2**

Ca. 80 g Paste des in Beispiel 1 beschriebenen ortho-Aminofarbstoffs werden in ca. 150 ml Wasser schwach alkalisch gelöst, mit 70 ml einer 10-%-igen Nitritlösung versetzt und unter Rühren zu einer Mischung aus 30 ml 30-%-iger Salzsäure und ca. 70 g Eis getropft. Der Nitritüberschuß wird nach ca. 30 Minuten mit wenig Amidosulfonsäure zerstört. 13 g Barbitursäure werden in ca. 500 ml Wasser neutral gelöst und zur Diazotierung getropft. Anschließend wird der pH-Wert mit 20-%-iger Sodalösung zwischen 6 und 7 gehalten.

Die Kupplung ist rasch beendet. Der erhaltene Farbstoff entspricht in Form der freien Säure der folgenden Formel

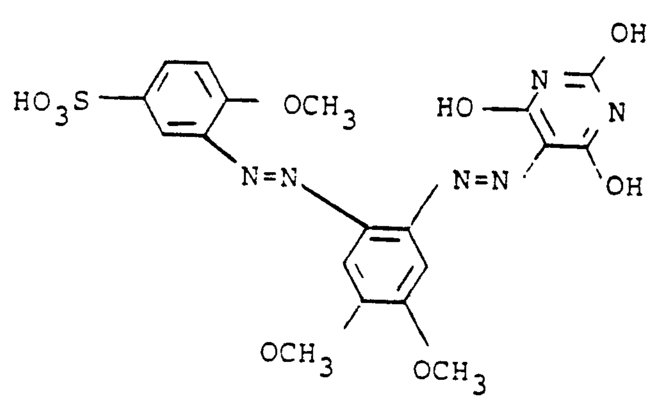

max = 378
" = 428
" = 486

**Beispiel 3**

Verwendet man statt 3-Amino-4-methoxybenzolsulfonsäure aus Beispiel 1 die äquivalente Menge 3-Amino-4-chlorbenzolsulfonsäure und verfährt nach den Angaben aus Beispiel 1 und 2 so erhält man einen Farbstoff, der in Form der freien Säure der folgenden Formel entspricht:

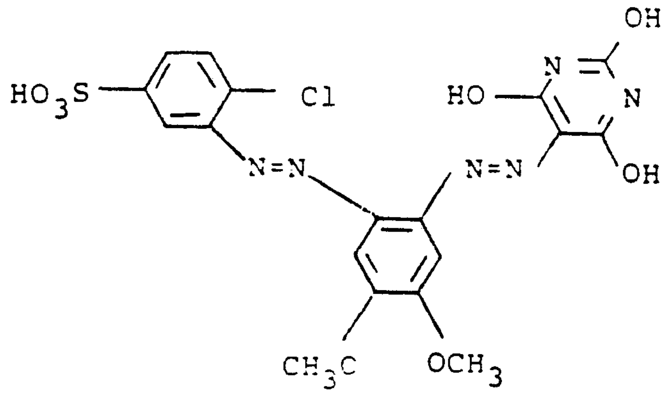

**Beispiel 4**

Ersetzt man in Beispiel 1 die 3-Amino-4-methoxybenzolsulfonsäure durch die äquivalente Menge der 3-Amino-4-hydroxybenzolsulfonsäure und verfährt nach den Angaben aus Beispiel 1 und 2, so erhält man einen wenig stabilen Farbstoff, der in Form der freien Säure der folgenden Formel entspricht:

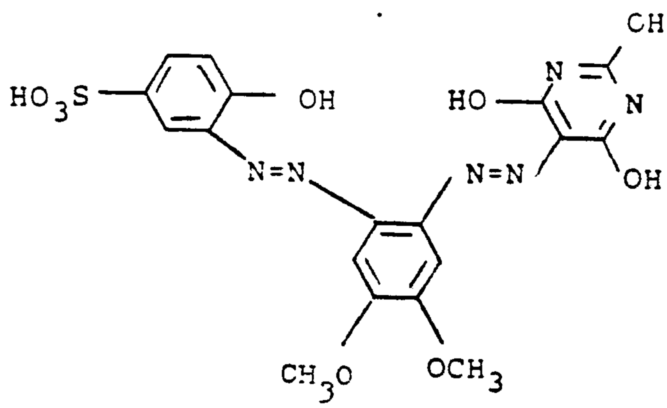

**Beispiel 5**

Die in Beispiel 2 oder Beispiel 3 beschriebene Reaktionsmischung des ortho-Disazofarbstoffs wird versetzt mit 25 g $CuSO_4$ x $5H_2O$ und einem Komplexbildner wie etwa Ammoniaklösung und 1 - 2 Stunden bei 95°C gerührt. Anschließend wird der Farbstoff mit Salz ausgeschieden und bei Raumtemperatur abgesaugt. Man erhält ca. 200 g Paste eines ortho-Disazo-Kupferkomplexes, der in Form der freien Säure der folgenden Formel entspricht:

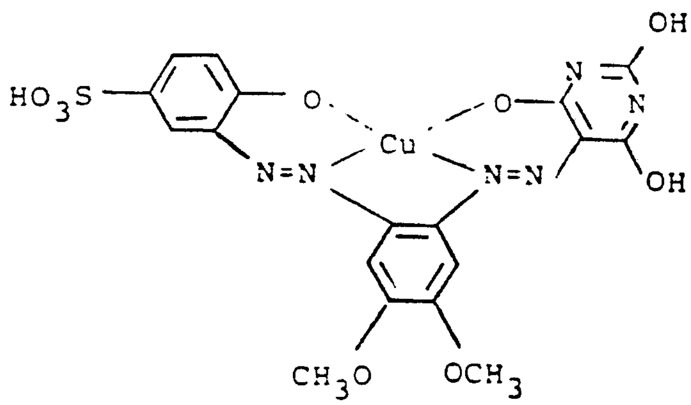

$\lambda_{max}$ = 374
" = 424
" = 532

Man erhält einen Farbstoff gleicher Konstitution jedoch in geringerer Ausbeute, wenn man den in Beispiel 4 beschriebenen Farbstoff in Wasser mit kupferabgebenden Mitteln behandelt und die entstehende Säure neutralisiert.

Der Farbstoff liefert auf Wolle und Polyamidfasermaterialien rotbraune Drucke und Färbungen von sehr guter Naß- und Lichtechtheit.

In der folgenden Tabelle I sind weitere Farbstoffe beschrieben, die man erhält, wenn man die Komponente A-$NH_2$ diazotiert und auf B-$NH_2$ orthoständig kuppelt, weiterdiazotiert und auf C-OH kuppelt, gemäß den Beispielen 1 - 3. Die Metallisierung erfolgt gemäß Beispiel 5. Die neuen Farbstoffe ergeben auf den angegebenen Substraten den angegebenen Farbton.

Die Absorptionsspektren zeigen teilweise mehrere Banden. Es werden daher häufig mehrere $\lambda_{max}$-Werte angegeben.

Tabelle I

| Bsp.-Nr. | A-$NH_2$ | B-$NH_2$ | C-OH | Me | Farbton | Substrat | $\lambda_{max}$ |
|---|---|---|---|---|---|---|---|
| 6 | 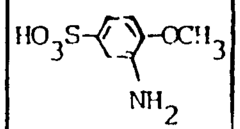 | 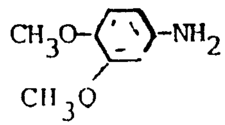 | 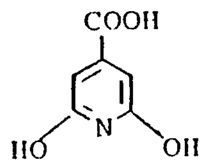 | Cu | schwarz-braun | Wolle + Polyamid | 385, 440, 554 |
| 7 | " | " | 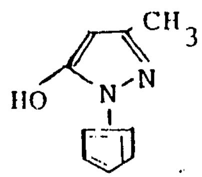 | Cu | dunkel-braun | " | 368, 430 |
| 8 | " | " | 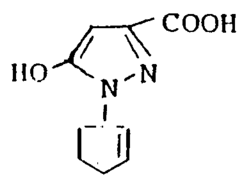 | Cu | " | " | 370, 436, 534 |
| 9 | " | " | 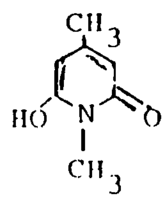 | Cu | " | " | 380, 440, 550 |

Tabelle 1

| Bsp.-Nr. | $A-NH_2$ | $B-NH_2$ | C-OH | Me | Farbton | Substrat | $\lambda_{max}$ |
|---|---|---|---|---|---|---|---|
| 10 | 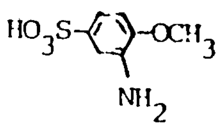 | 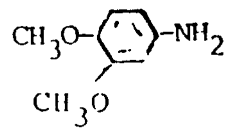 | 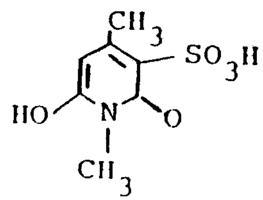 | Cu | dunkel-braun | Wolle + Polyamid | 385, 440 555 |
| 11 | " | " | 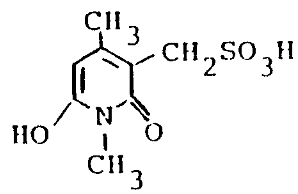 | Cu | " | " | 383, 440 552 |
| 12 | " | 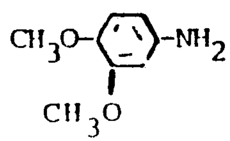 | 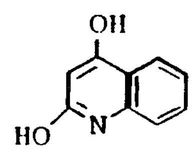 | Cu | braun grün | " | |
| 13 | " | " | 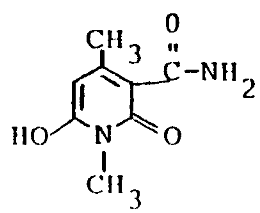 | Cu | dunkel-braun | " | 385, 440 554 |

Tabelle I

| Bsp.-Nr. | A-$NH_2$ | B-$NH_2$ | C-OH | Me | Farbton | Substrat | $\lambda_{max}$ |
|---|---|---|---|---|---|---|---|
| 14 | 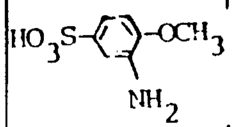 | 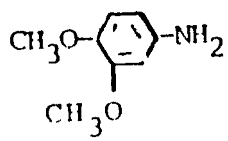 | 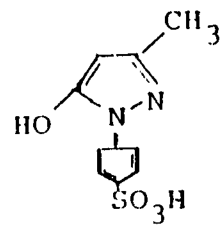 | Cu | dunkel-braun | Wolle, Polyamid + Leder | 368, 430 |
| 15 | " | " | 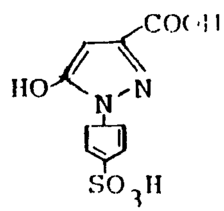 | Cu | " | " | 370, 436, 535 |
| 16 | 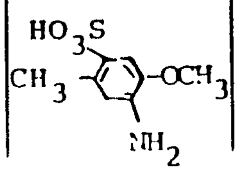 | " | 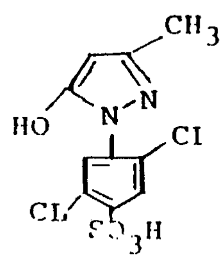 | Cu | " | " | |

Tabelle I

| Bsp.-Nr. | A-NH$_2$ | B-NH$_2$ | C-OH | Me | Farbton | Substrat | $\lambda_{max}$ |
|---|---|---|---|---|---|---|---|
| 17 | 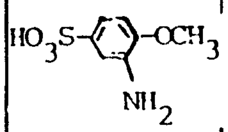 | 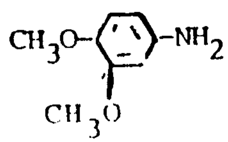 | 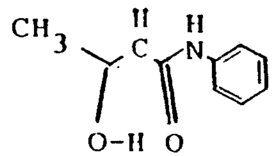 | Cu | braun | Wolle + Polyamid | 300, 380 |
| 18 | " | " | 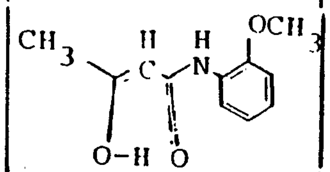 | Cu | " | " | 302, 370, 406 |
| 19 | " | " | 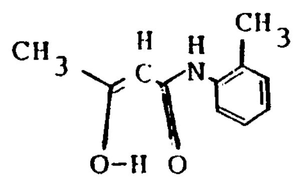 | Cu | " | " | 301, 365, 400 |
| 20 | 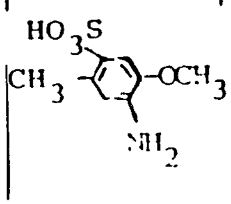 | " | 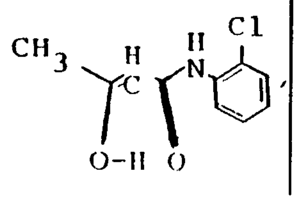 | Cu | " | " | 300, 365, 400 |

Tabelle 1

| Bsp.-Nr. | A-NH2 | B-NH2 | C-OH | Me | Farbton | Substrat | $\lambda_{max}$ |
|---|---|---|---|---|---|---|---|
| 21 | 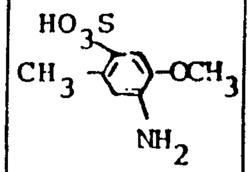 | 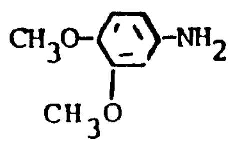 | 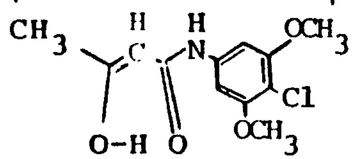 | Cu | braun | Wolle + Polyamid | 305, 373, 410 |
| 22 | 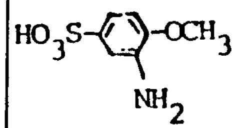 | " | 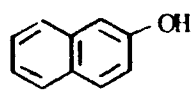 | Cu | oliv | " | 312, 462 |
| 23 | " | " | 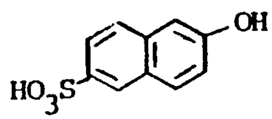 | Cu | " | Wolle, Polyamid + Leder | 490 |
| 24 | 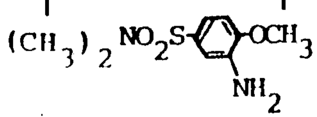 | " | 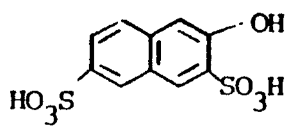 | Cu | " | " | 495 |

Tabelle I

| Bsp.-Nr. | $A-NH_2$ | $B-NH_2$ | C-OH | Me | Farbton | Substrat | $\lambda_{max}$ |
|---|---|---|---|---|---|---|---|
| 25 | 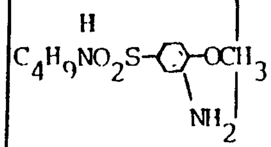 | 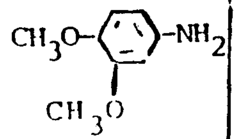 | 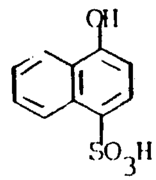 | Cu | oliv | Wolle, Polyamid + Leder | 320, 465 |
| 26 | 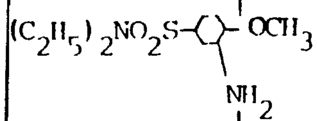 | " | 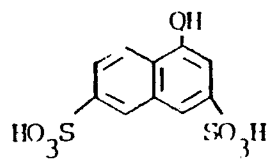 | Cu | " | " | 320, 468 |
| 27 | 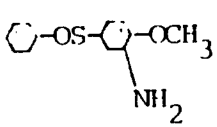 | " | 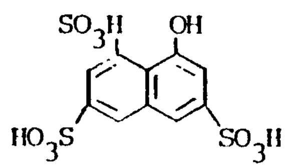 | Cu | " | " | 322, 468 |
| 28 | 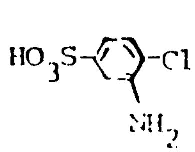 | " | 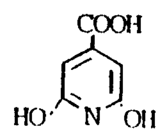 | Cu | schwarzbraun | Wolle + Polyamid | 385, 440, 554 |

**Tabelle I**

| Bsp.-Nr. | $A-NH_2$ | $B-NH_2$ | C-OH | Me | Farbton | Substrat | $\lambda_{max}$ |
|---|---|---|---|---|---|---|---|
| 29 | 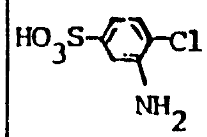 | 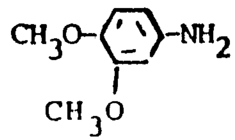 | 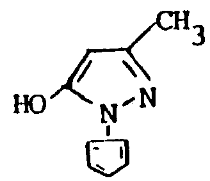 | Cu | dunkel-braun | Wolle + Polyamid | 368, 430 |
| 30 | 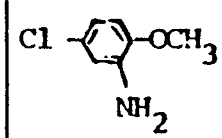 | " | 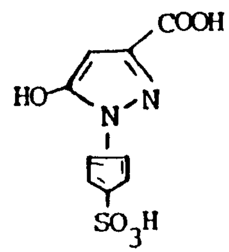 | Cu | " | Wolle, Polyamid + Leder | 369, 435, 534 |
| 31 | 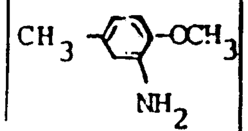 | " | 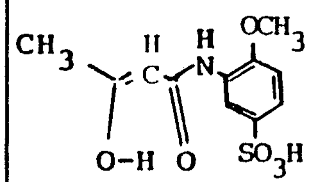 | Cu | braun | " | 300, 370, 400 |
| 32 | 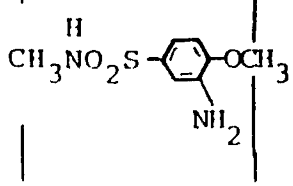 | " | 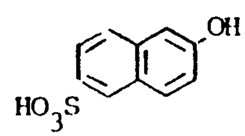 | Cu | oliv | " | 490 |

Tabelle I

| Bsp.-Nr. | A-$NH_2$ | B-$NH_2$ | C-OH | Me | Farbton | Substrat | $\lambda_{max}$ |
|---|---|---|---|---|---|---|---|
| 33 | 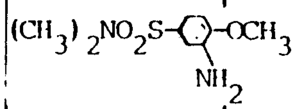 | 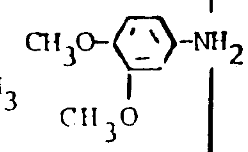 | 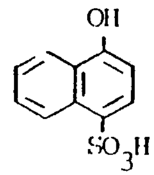 | Cu | oliv | Wolle, Polyamid + Leder | 320, 465 |
| 34 | 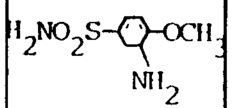 | " | 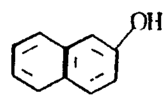 | Cu | " | Wolle + Polyamid | 310, 460 |
| 35 | " | 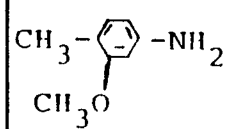 | 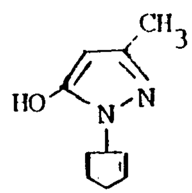 | Cu | braun | " | 366, 430 |
| 36 | 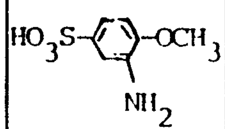 | 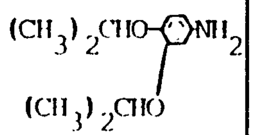 | " | Cu | dunkel-braun | " | 369, 433 |

Tabelle I

| Bsp.-Nr. | A-NH2 | B-NH2 | C-OH | Me | Farbton | Substrat | λ max |
|---|---|---|---|---|---|---|---|
| 37 | 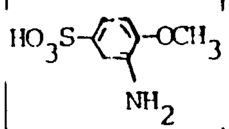 | 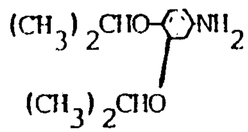 | 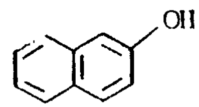 | Cu | oliv | Wolle + Polyamid | 313, 465 |
| 38 | " | 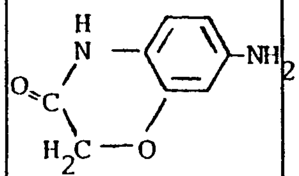 | " | Cu | " | " | |
| 39 | " | 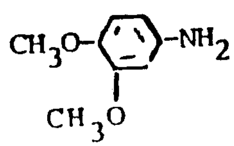 | " | Ni | " | " | |

**Beispiel 40**

Ca. 80 g Paste des in Beispiel 1 beschriebenen ortho-Aminoazofarbstoffs werden in ca. 150 ml Wasser schwach alkalisch gelöst, mit 70 ml einer 10-%-igen Nitritlösung versetzt und unter Rühren zu einer Mischung aus 30 ml einer 30-%-igen Salzsäure und ca. 70 g Eis getropft. Der Nitritüberschuß wird nach ca. 30 Minuten mit wenig Amidosulfonsäure zerstört.

24 g 6-Amino-1-hydroxynaphthalin-3-sulfonsäure (J-Säure) werden in 200 ml Wasser mit Natronlauge neutral gelöst, gekühlt und mit 150 ml einer 20-%-igen Sodalösung versetzt. Dann läßt man die oben beschriebene Diazotierung langsam zulaufen. Die Kupplung ist rasch beendet. Man erhält einen Farbstoff in Wasser, der in Form der freien Säure der folgenden Formel entspricht:

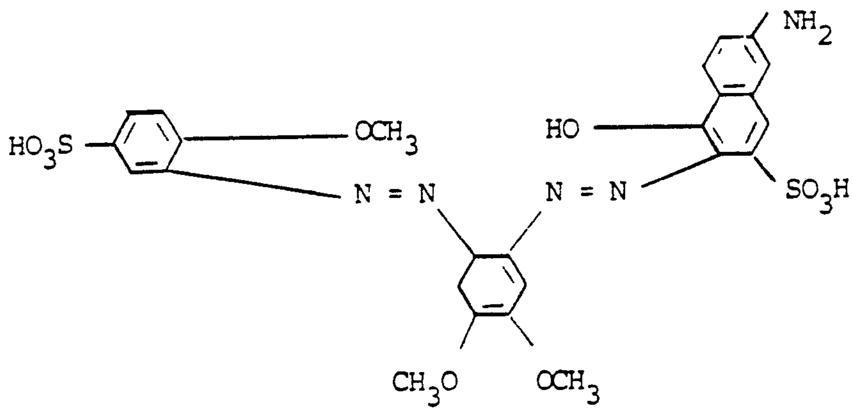

**Beispiel 41**

Die in Beispiel 40 beschriebene Reaktionsmischung wird mit einer ammoniakalischen Kupfersulfatlösung versetzt, die 25 g $CuSO_4$ x $5H_2O$ enthält, und 1 - 2 Stunden bei 95°C gerührt. Anschließend wird der Farbstoff mit Salz ausgeschieden und bei Raumtempertur abgesaugt. Man erhält einen Farbstoff, der in Form der freien Säure der folgenden Formel entspricht:

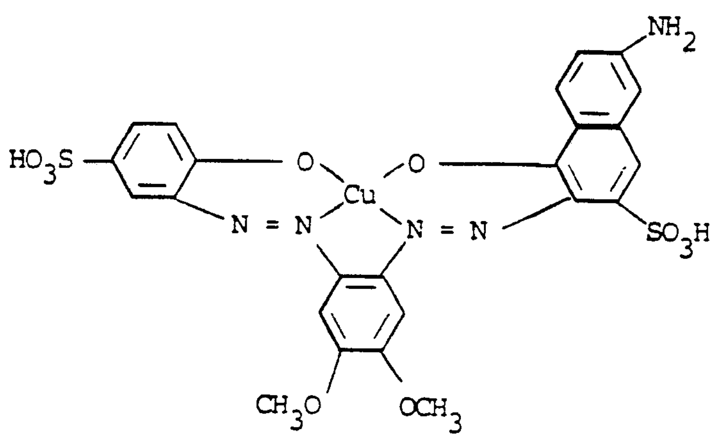

**Beispiel 42**

Die gesamte Paste des in Beispiel 41 beschriebenen Farbstoffs wird in ca. 1 Liter Wasser gelöst, mit 18 g 2,4,6-Trifluor-5-chlor-pyrimidin versetzt und mehrere Stunden bei 25 - 35°C kondensiert. Die freiwerdende Fluorwasserstoffsäure wird mit Hydroxiden, Carbonaten oder Hydrogencarbonaten der Alkalimetalle neutralisiert. Der entstandene Reaktivfarbstoff wird mit Natriumchlorid ausgeschieden, abgesaugt und getrocknet. Man erhält ein schwarzes Pulver eines Farbstoffs, der in Form der freien Säure der folgenden Formel entspricht:

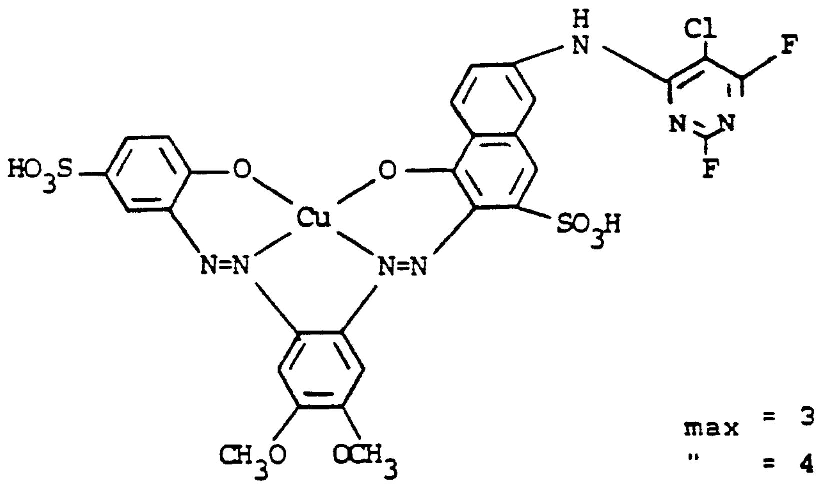

max = 302
" = 468
" = 588

Der Farbstoff löst sich in Wasser mit olivbrauner Farbe, er liefert auf Cellulose-Materialien olive Färbungen und Drucke.

In der folgenden Tabelle II sind weitere Reaktiv-Farbstoffe beschrieben, die man erhält, wenn man die Komponente A-$NH_2$ diazotiert und auf B-$NH_2$ kuppelt, weiterdiazotiert und auf eine teils aminogruppenhaltige Komponente C-OH kuppelt, metallisiert und gegebenenfalls mit einer Verbindung X-Halogen kondensiert. Die neuen Farbstoffe ergeben auf Cellulose-Materialien sehr lichtechte und chlorechte Färbungen und Drucke in den angegebenen Nuancen.

Tabelle II

| Bsp.-Nr. | A-$NH_2$ | B-$NH_2$ | C-OH | Me | X-Halogen | Farbton | $\lambda_{max}$ |
|---|---|---|---|---|---|---|---|
| 43 | 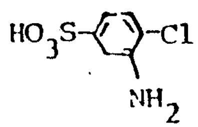 | 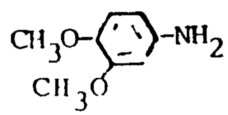 | 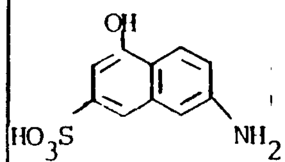 | Cu | 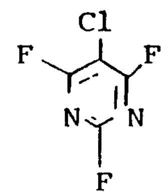 | oliv | 302, 468, 588 |
| 44 | " | " | " | Cu | 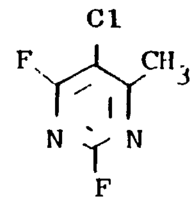 | " | 302, 468, 588 |
| 45 | 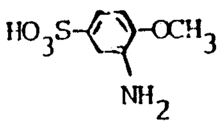 | " | " | Cu | 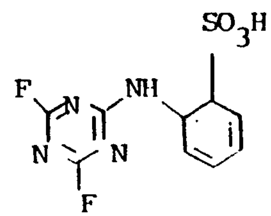 | " | 302, 468, 588 |
| 46 | " | " | " | Cu | 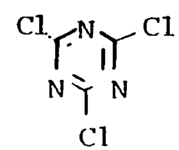 | " | 302, 468, 588 |

<u>Tabelle II</u>

| Bsp.-Nr. | A-$NH_2$ | B-$NH_2$ | C-OH | Me | X-Halogen | Farbton | $\lambda_{max}$ |
|---|---|---|---|---|---|---|---|
| 47 | 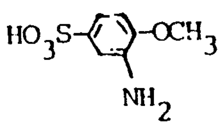 | 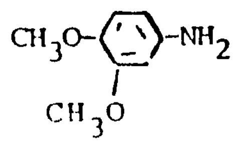 | 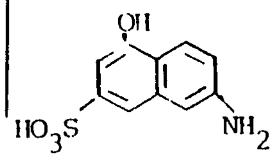 | Cu | 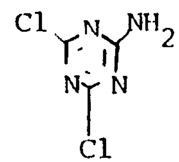 | oliv | 302, 468, 588 |
| 48 | " | " | " | Cu | 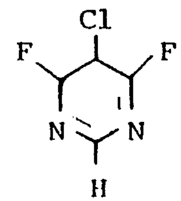 | " | 302, 468, 588 |
| 49 | " | " | " | Cu | 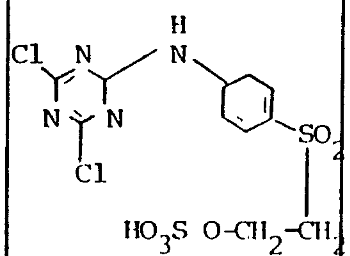 | " | 302, 468. 588 |
| 50 | " | " | " | Cu | 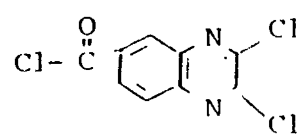 | " | 302, 468 588 |

Tabelle II

| Bsp.-Nr. | A-NH₂ | B-NH₂ | C-OH | Me | X-Halogen | Farbton | $\lambda_{max}$ |
|---|---|---|---|---|---|---|---|
| 51 | 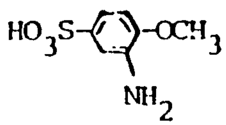 | 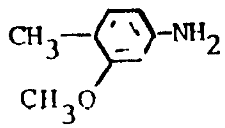 | 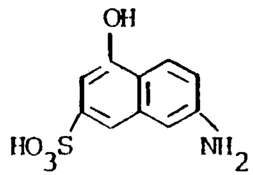 | Cu | 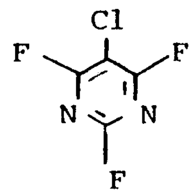 | oliv | |
| 52 | " | 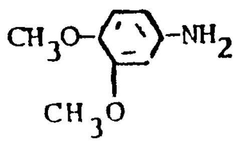 | " | Ni | " | " | |
| 53 | " | 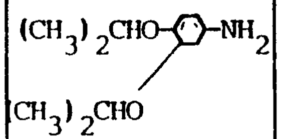 | " | Cu | " | " | 302. 470 586 |
| 54 | " | 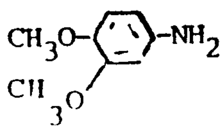 | 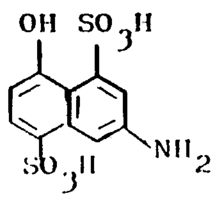 | Cu | " | " | 314. 468 582 |

Tabelle II

| Bsp.-Nr. | $A-NH_2$ | $B-NH_2$ | C-OH | Me | X-Halogen | Farbton | $\tilde{\nu}_{max}$ |
|---|---|---|---|---|---|---|---|
| 55 | 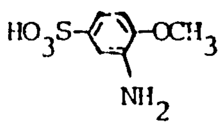 | 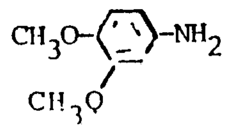 | 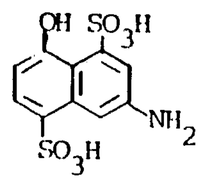 | Cu | 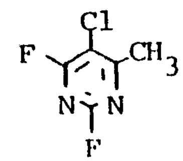 | oliv | 314, 468, 582 |
| 56 | " | " | " | Cu | 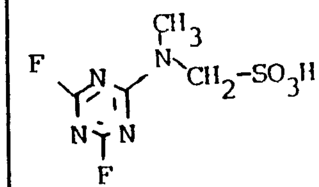 | " | 314, 468, 582 |
| 57 | " | " | " | Cu | 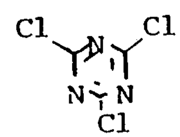 | " | 314, 468, 582 |
| 58 | " | " | " | Cu | 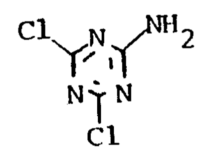 | " | 314, 468, 582 |

Tabelle II

| Bsp.-Nr. | A-$NH_2$ | B-$NH_2$ | C-OH | Me | X-Halogen | Farbton | $\lambda_{max}$ |
|---|---|---|---|---|---|---|---|
| 59 | 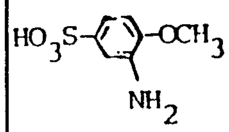 | 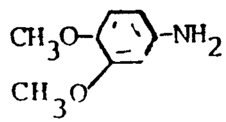 | 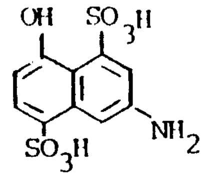 | Cu | 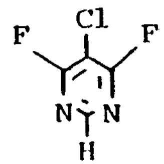 | oliv | 314, 468, 582 |
| 60 | " | " | " | Cu | 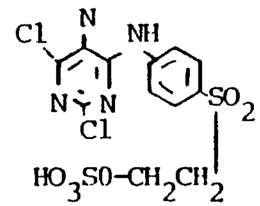 | " | 314, 468, 582 |
| 61 | " | " | " | Cu | 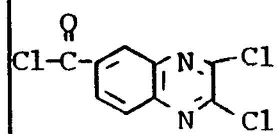 | " | 314, 468, 582 |
| 62 | " | 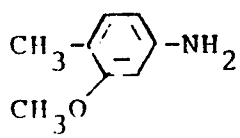 | " | Cu | 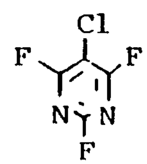 | " | |

Tabelle II

| Bsp.-Nr. | A-NH2 | B-NH2 | C-OH | Me | X-Halogen | Farbton | $\lambda_{max}$ |
|---|---|---|---|---|---|---|---|
| 63 | 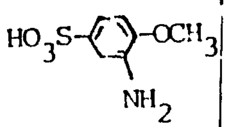 | 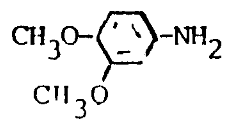 | 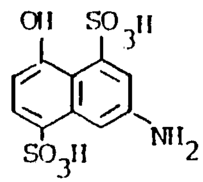 | Ni | 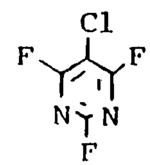 | oliv | |
| 64 | " | 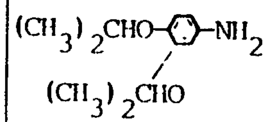 | " | Cu | " | " | 316, 470, 580 |

Tabelle II

| Bsp.-Nr. | A-NH2 *) | B-NH2 | C-OH | Me | X-Halogen | Farbton | $\lambda_{max}$ |
|---|---|---|---|---|---|---|---|
| 65 | 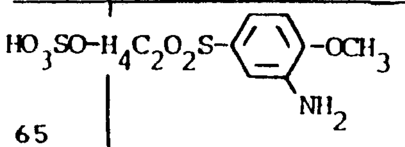 | 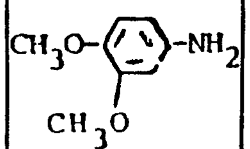 | 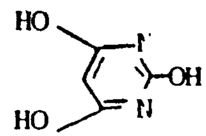 | Cu | - | rotbraun | 375, 425, 532 |
| 66 | " | " | 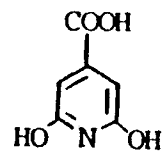 | Cu | - | schwarz-braun | 386, 440, 554 |
| 67 | " | " | 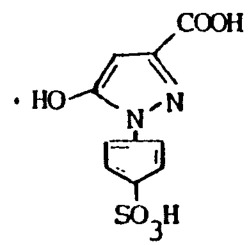 | Cu | - | dunkel-braun | 370, 437 535 |
| 68 | " | " | 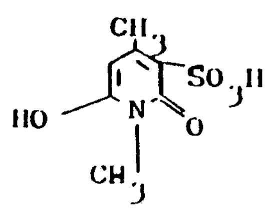 | Cu | - | " | 385, 440 555 |

*) Die Sulfatierung erfolgt nach der Metallisierung gemäß DAS 1 443 877

Tabelle II

| Bsp.-Nr. | A-NH₂ *) | B-NH₂ | C-OH | Me | X-Halogen | Farbton | $\lambda_{max}$ |
|---|---|---|---|---|---|---|---|
| 69 | 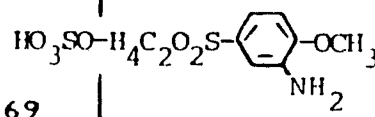 | 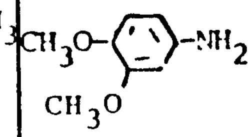 | 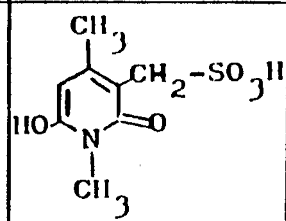 | Cu | - | dunkel-braun | 383, 440, 552 |
| 70 | " | " | 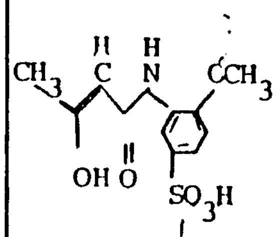 | Cu | - | braun | 303, 372, 406 |
| 71 | 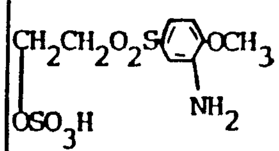 | " | 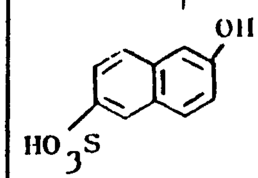 | Cu | - | oliv | 491 |

*) Die Sulfatierung erfolgt nach der Metallisierung gemaß DAS 1 443 877

Tabelle II

| Bsp.-Nr. | A-NH2 *) | B-NH2 | C-OH | Me | X-Halogen | Farbton | $\lambda_{max}$ |
|---|---|---|---|---|---|---|---|
| 72 | 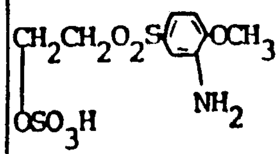 | 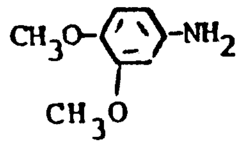 | 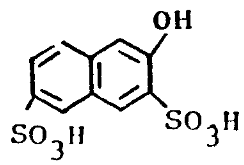 | Cu | - | oliv | 496 |
| 73 | " | " | 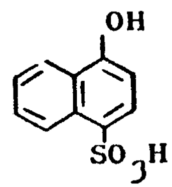 | Cu | - | " | 322, 465 |
| 74 | " | " | 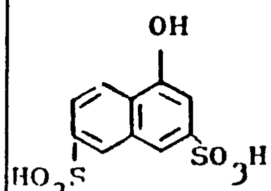 | Cu | - | " | 322, 468 |
| 75 | " | " | 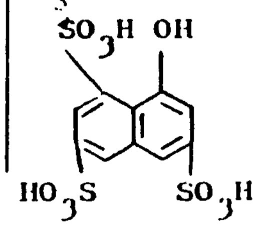 | Cu | - | " | 324, 468 |

*) Die Sulfatierung erfolgt nach der Metallisier‹ ‹g gemaß DAS 1 443 877

Tabelle II

| Bsp.-Nr. | A-NH₂ *) | B-NH₂ | C-OH*) | Me | X-Halogen | Farbton | $\lambda_{max}$ |
|---|---|---|---|---|---|---|---|
| 76 | 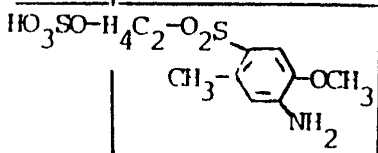 | 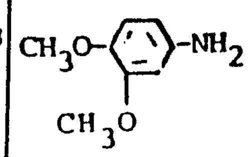 | 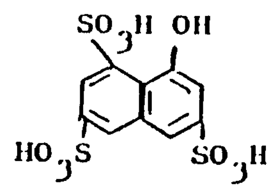 | Cu | - | oliv | |
| 77 | 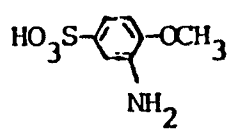 | " | 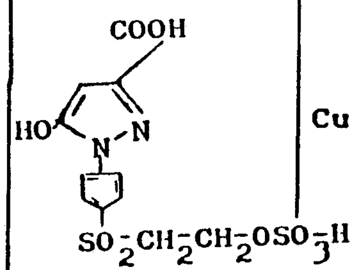 | Cu | - | dunkel-braun | 370, 436, 535 |
| 78 | " | " | 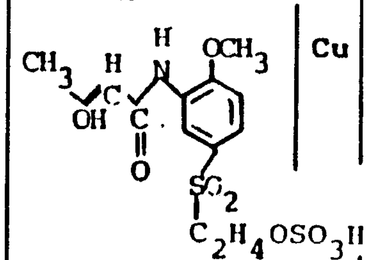 | Cu | - | braun | |
| 79 | 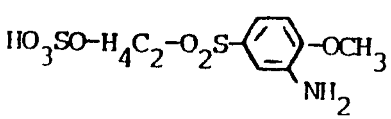 | " | " | Cu | - | " | |

*) Die Sulfatierung erfolgt nach der Metallisierung gemaß DAS 1 443 877

Tabelle II

| Bsp.-Nr. | A-$NH_2$ *) | B-$NH_2$ | C-OH*) | Me | X-Halogen | Farbton | λmax |
|---|---|---|---|---|---|---|---|
| 80 | 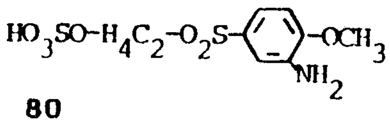 | 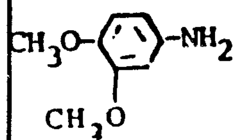 | 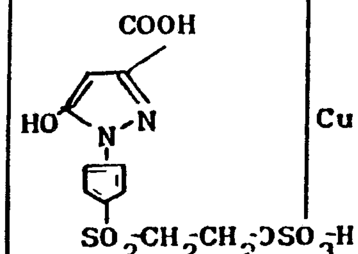 | Cu | - | dunkel-braun | 371, 436, 535 |
| 81 | 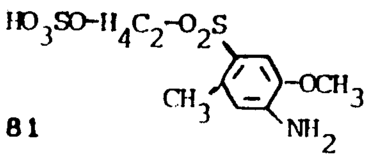 | | " | Cu | - | " | |
| 82 | 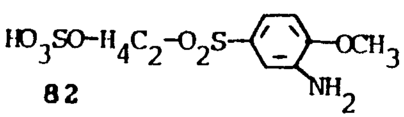 | | 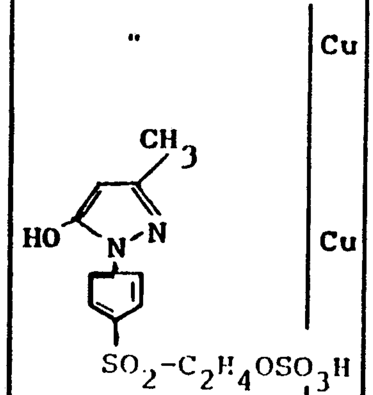 | Cu | - | " | 369, 430 |
| 83 | 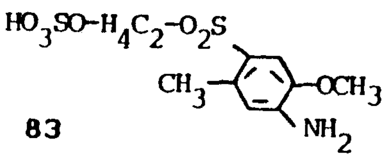 | | " | Cu | - | " | |

*) Die Sulfatierung erfolgt nach der Metallisierung gemäß DAS 1 443 877

Tabelle II

| Bsp.-Nr. | A-NH$_2$ *) | B-NH$_2$ | C-OH*) | Me | X-Halogen | Farbton | λmax |
|---|---|---|---|---|---|---|---|
| 84 | 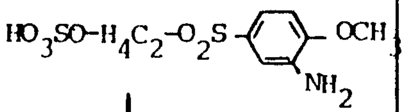 | 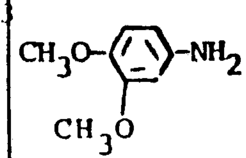 | 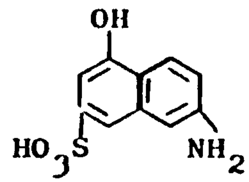 | Cu | 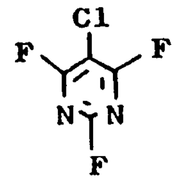 | oliv | 303, 468, 588 |
| 85 | " | " | 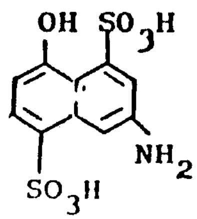 | Cu | " | " | 315, 468, 582 |
| 86 | " | " | " | Cu | 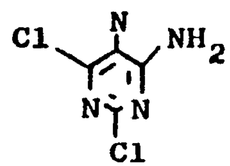 | " | 315, 468, 582 |
| 87 | " | " | 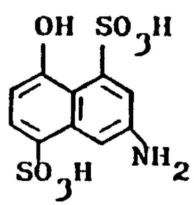 | Cu | 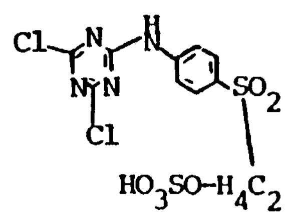 | " | 315, 468 582 |

*) Die Sulfatierung erfolgt nach der Metallisierung gemäß DAS 1 443 877

<u>Tabelle II</u>

| Bsp.-Nr. | A-NH2 *) | B-NH2 | C-OH*) | Me | X-Halogen | Farbton | max |
|---|---|---|---|---|---|---|---|
| 88 | 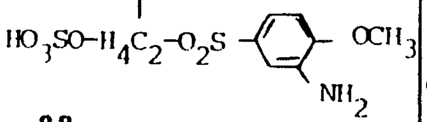 | 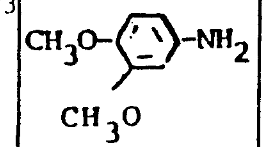 | 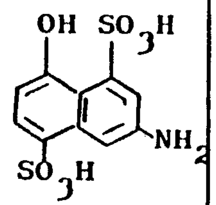 | Cu | 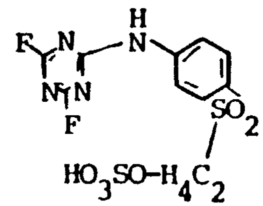 | oliv | 315, 468, 582 |
| 89 | " | | 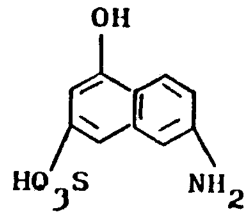 | Cu | " | " | 303, 468, 588 |
| 90 | " | " | " | Cu | 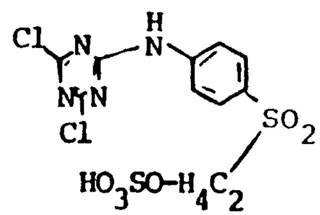 | " | 303, 468, 588 |
| 91 | " | " | " | Ni | " | " | |

*) Die Sulfatierung erfolgt nach der Metallisierung gemaß DAS 1 443 877

Tabelle II

| Bsp.-Nr. | $A-NH_2$ | $B-NH_2$ | C-OH | Me | X-Halogen | Farbton | $\lambda_{max}$ |
|---|---|---|---|---|---|---|---|
| 92 | 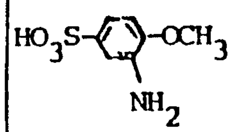 | 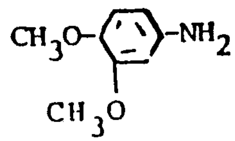 | 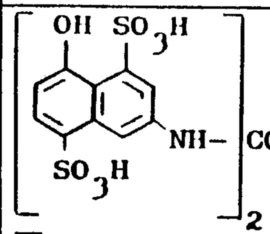 | Cu | - | oliv | 314, 470, 582 |
| 93 | " | " | 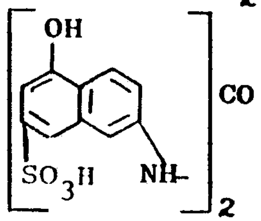 | Cu | - | " | 302, 470, 588 |
| 94 | " | " | 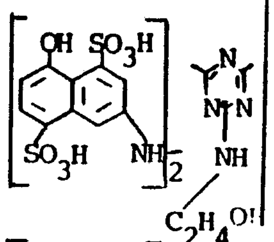 | Cu | - | " | 314, 470, 582 |
| 95 | " | " | 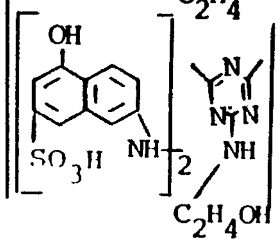 | Cu | - | " | 302, 470, 588 |

## Patentansprüche

1. Metallkomplex-Farbstoffe, die in Form der freien Säure der Formel

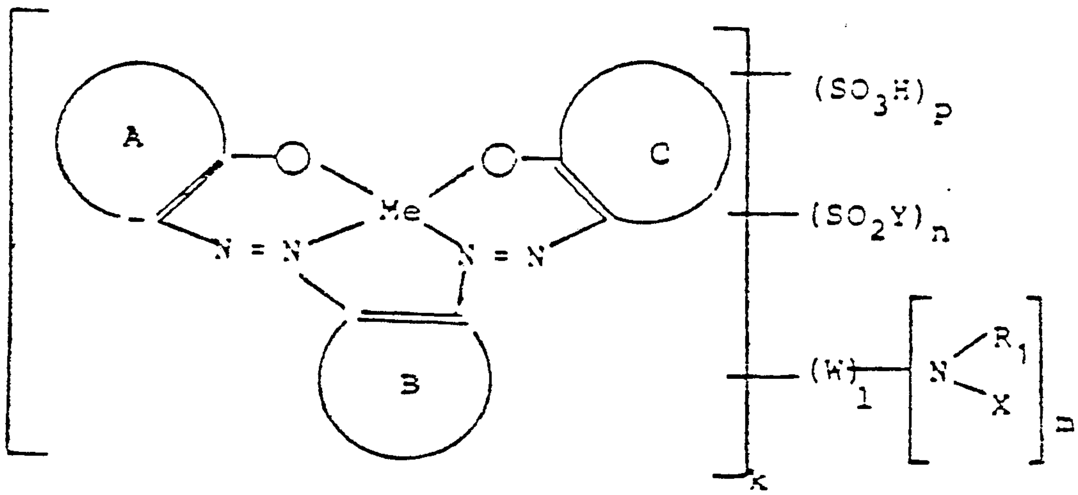

entsprechen, worin

A = Rest der Benzol- oder Naphthalinreihe

B = Rest der Benzolreihe der in p-Stellung zu den Azogruppen substituiert ist,

C = Rest einer phenolischen oder enolischen Kupplungskomponente, insbesondere einer solchen der Hydroxybenzol-, Hydroxynaphthalin-, Pyrazolon-, Pyridon-, Pyrimidon-, Chinolon- oder Acetessigarylidreihe.

W = direkte Bindung oder ein Brückenglied zu einem C-Atom der Benzol- oder Naphthalinkerne A, B oder C bzw. einem C-Atom eines aromatisch-heterocyclischen Ringes C,

$R_1$ = Wasserstoff oder gegebenenfalls substituiertes $C_1$-$C_4$-Alkyl

X = faserreaktiver Rest oder H

Y = Vinyl, β-Halogenvinyl oder -O-$CH_2$-$CH_2$-Z worin

Z = Abgangsgruppe

k = 1 oder 2

l = 0 oder 1

p = 0 bis 4

m = 0, 1, 2 oder 3

n = 0, 1, 2, 3 oder 4

Me = Zweiwertiges Metallatom, insbesondere Cu und Ni.

2. Farbstoffe des Anspruchs 1 der allgemeinen Formel

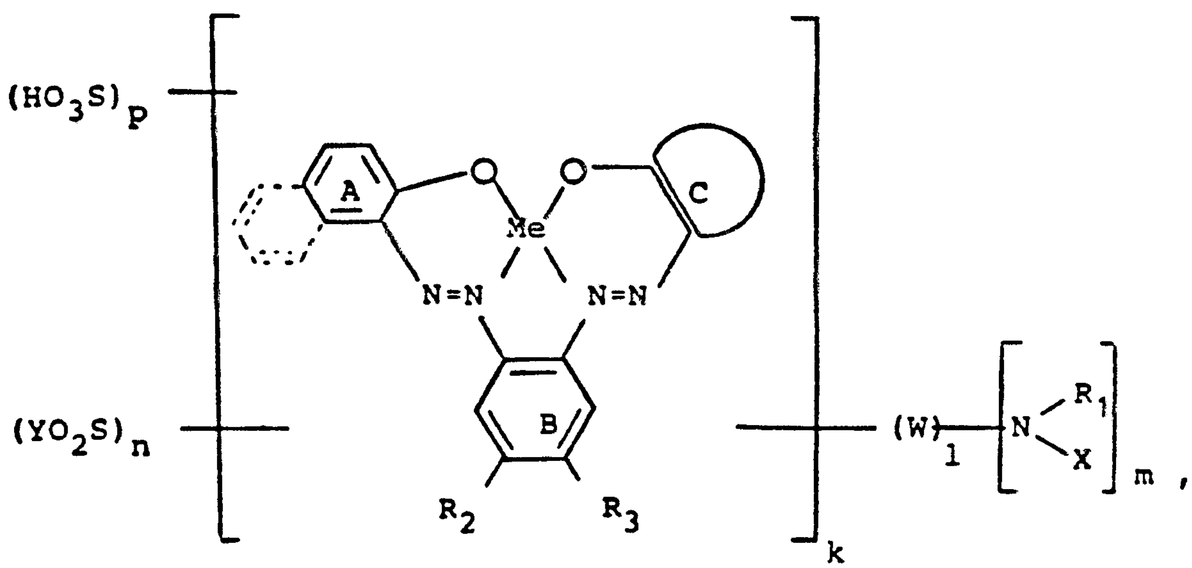

worin A und C gegebenenfalls weitere Substituenten aufweisen können,

$R_2$ = $C_1$-$C_4$-Alkyl, Halogen, insbesondere Chlor, $C_1$-$C_4$-Alkoxy, $C_1$-$C_4$-Alkylcarbonylamino, Arylcarbonylamino, Aralkylcarbonylamino,

$R_3$ = $C_1$-$C_4$-Alkoxy,

oder

$R_2$ und $R_3$ einen Ring bilden und folgende Bedeutung haben:

$R_2 + R_3 =$ 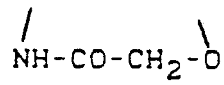 ,

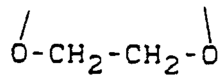 .

und

Y, C, W, $R_1$, X, k, l, m, n, p und Me die in Anspruch 1 angegebene Bedeutung haben und die Alkyl-, Alkoxy-, Aryl- und Aralkylreste übliche Substituenten aufweisen können.

3. Farbstoffe der Ansprüche 1 und 2 mit
l, m, n, p = 0
k = 1,
die frei von wasserlöslich machenden Gruppen sind.

4. Farbstoffe der Ansprüche 1 und 2 mit
l, m, n = 0
k = 1
p = 1 - 3 und

5. Farbstoffe der Ansprüche 1 und 2 mit
l, m, p = 0
k = 1
n = 1 oder 2, worin
Y = $CH_2$-$CH_2Z$
Z = -O-$SO_3H$, -S-$SO_3H$, -O-$PO_3H_2$.

6. Farbstoffe der Ansprüche 1 und 2 mit
m, n = 0
l = 1
k = 2 und
p = 2 bis 8.

7. Reaktiv-Farbstoffe der allgemeinen Formel

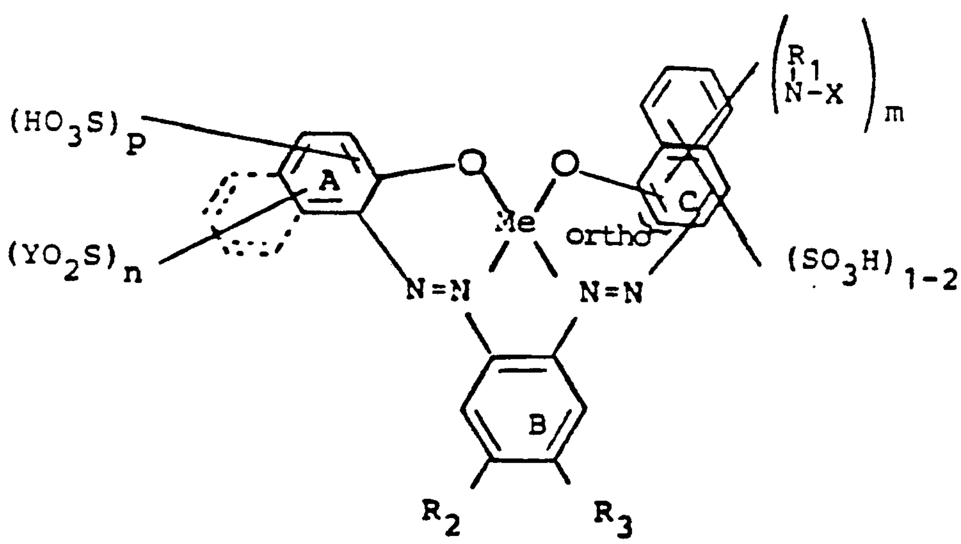

worin

Y, n, $R_2$, $R_3$, $R_1$, m, p und Me die in Anspruch 2 genannte Bedeutung haben und X für einen Reaktivrest steht.

8. Reaktivfarbstoff des Anspruchs 7 mit
$R_2$ und $R_3$ = $C_1$-$C_4$-Alkoxy
$R_1$ = H, wobei
Y, n, X, m, Me die in Anspruch 7 genannte Bedeutung haben.

9. Reaktivfarbstoffe der Formel

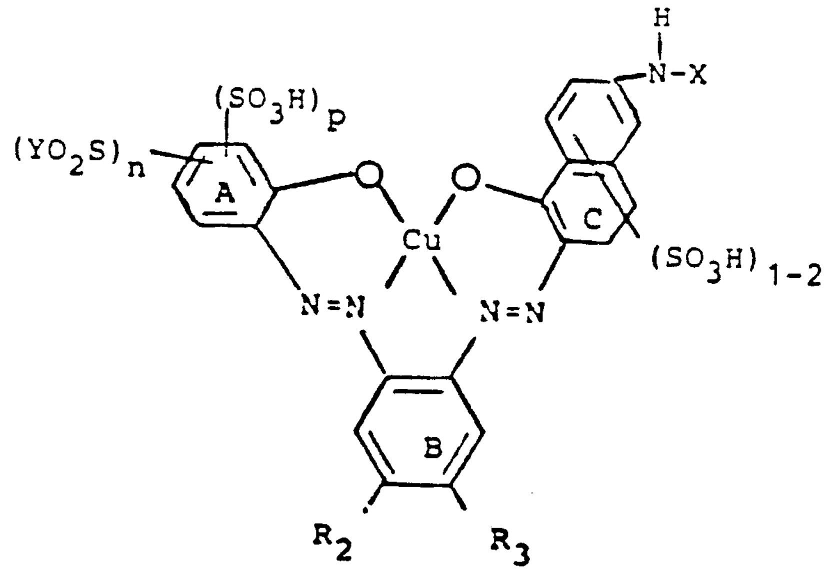

worin $R_2$, $R_3$, X, Y, n und p die in Anspruch 1 genannte Bedeutung haben.

10. Verwendung der Farbstoffe der Ansprüche 1 - 9 zum Färben und Bedrucken von natürlichen oder synthetischen, insbesondere Hydroxylgruppen- oder Amidgruppen-haltigen Materialien.

11. Mit den Farbstoffen der Ansprüche 1 - 9 gefärbte oder bedruckte natürliche oder synthetische Materialien, insbesondere Hydroxylgruppen- oder Amidgruppen-haltige.

## Claims

1. Metal complex dyestuffs which in the form of the free acid conform to the formula

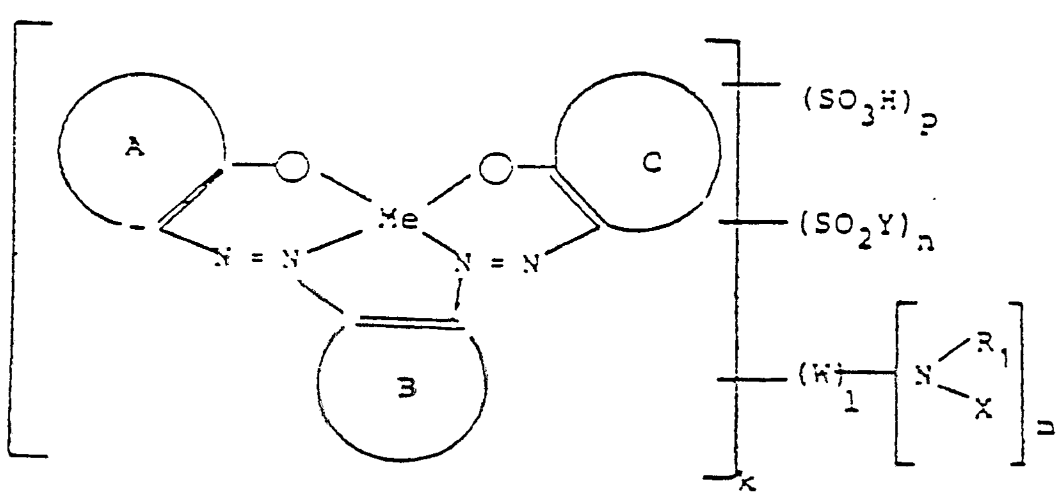

wherein

A = radical of benzene or naphthalene series

B = radical of benzene series which is substituted in p-position relative to the azo groups,

C = radical of a phenolic or enolic coupling component, in particular of a phenolic or enolic coupling component of the hydroxybenzene, hydroxynaphthalene, pyrazolone, pyridone, pyrimidone, quinolone or acetoacetarylide series,

W = direct bond or a bridge member to a C atom of benzene or naphthalene nuclei A, B, or C or to a C atom of an aromatically heterocylic ring C,

$R_1$ = hydrogen or optionally substituted $C_1$-$C_4$-alkyl

X = fibre-reactive radical or H

Y = vinyl, β-halogenovinyl or $-O-CH_2-CH_2-Z$ wherein

Z = leaving group

k = 1 or 2

l = 0 or 1

p = 0 to 4
m = 0, 1, 2 or 3
n = 0, 1, 2, 3 or 4
Me = divalent metal atom, in particular Cu and Ni.

2. Dyestuffs of Claim 1 of the general formula

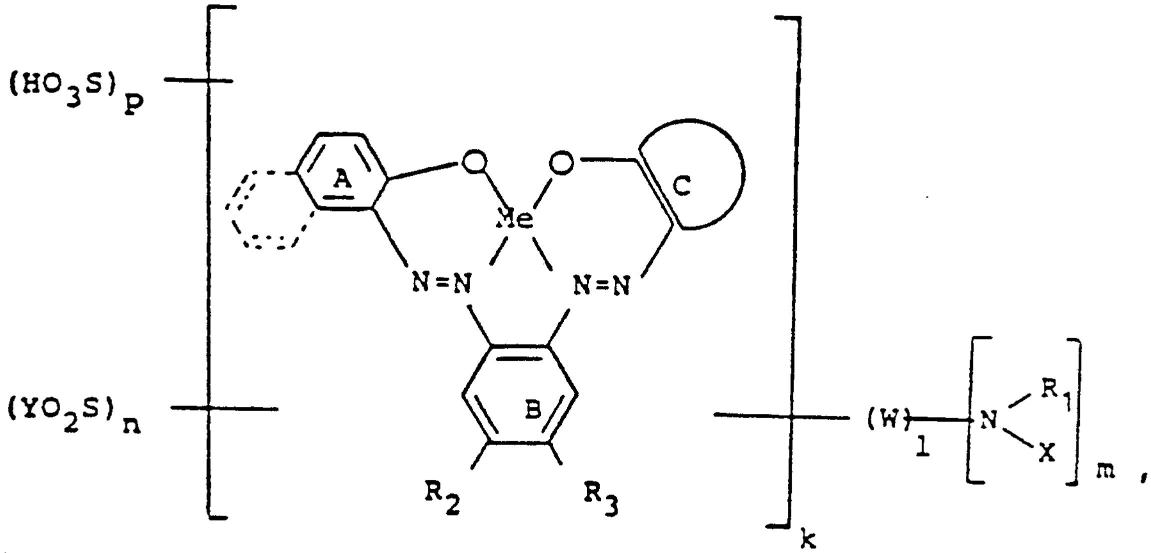

wherein
A and C may have further substituents,
$R_2$ = $C_1$-$C_4$-alkyl, halogen, in particular chlorine, $C_1$-$C_4$-alkoxy, $C_1$-$C_4$-alkylcarbonylamino, arylcarbonylamino, aralkylcarbonylamino,
$R_3$ = $C_1$-$C_4$-alkoxy,
or
$R_2$ and $R_3$ form a ring and have the meaning below:

$R_2 + R_3$ = NH-CO-$CH_2$-O,

O-$CH_2$-$CH_2$-O

and
Y, C, W, $R_1$, X, k, l, m, n, p and Me have the meaning specified in Claim 1 and the alkyl, alkoxy, aryl and aralkyl radicals have customary substituents.

3. Dyestuffs of Claims 1 and 2 where
l, m, n, p = 0
k = 1,
which are free of water-solubilizing groups.

4. Dyestuffs of Claims 1 and 2 where
l, m, n = 0
k = 1
p = 1 - 3.

5. Dyestuffs of Claims 1 and 2 where
l, m, p = 0
k = 1
n = 1 or 2, wherein
Y = $CH_2$-$CH_2Z$
Z = -O-$SO_3H$, -S-$SO_3H$, -O-$PO_3H_2$.

6. Dyestuffs of Claims 1 and 2 where
m, n = 0
l = 1
k = 2 and
p = 2 to 8.

7. Reactive dyestuffs of the general formula

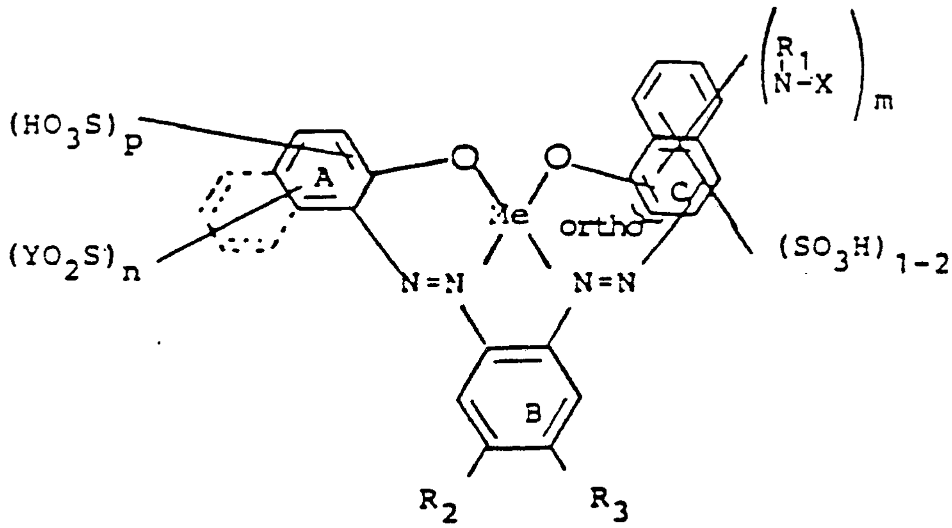

wherein

Y, n, $R_2$, $R_3$, $R_1$, m, p and Me have the meaning mentioned in Claim 2 and X stands for a reactive radical.

8. Reactive dyestuff of Claim 7 where

$R_2$ and $R_3$ = $C_1$-$C_4$-alkoxy

$R_1$ = H, where

Y, n, X, m, Me have the meaning mentioned in Claim 7.

9. Reactive dyestuffs of the formula

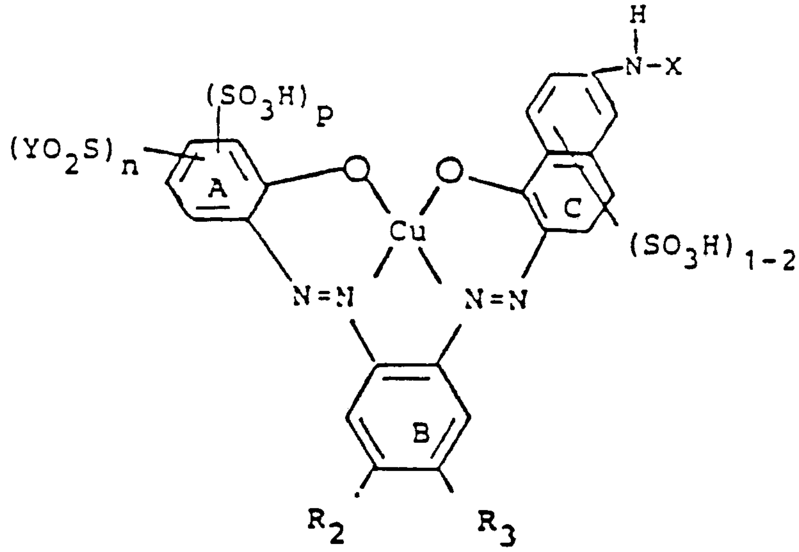

wherein
$R_2$, $R_3$, X, Y, n and p have the meaning mentioned in Claim 1.

10. Use of the dyestuffs of Claims 1 - 9 for dyeing and printing natural or synthetic, in particular hydroxyl- or carbamoyl-containing materials.

11. Natural or synthetic, in particular hydroxyl- or carbamoyl-containing, materials dyed or printed with the dyestuffs of Claims 1 - 9.

**Revendications**

1. Colorants complexes métalliques qui, sous la forme de l'acide libre, répondent à la formule

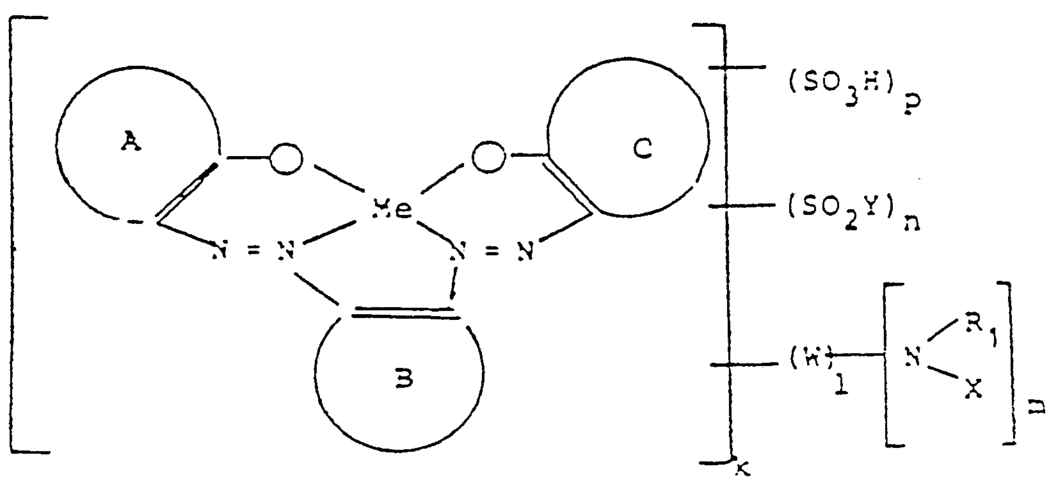

dans laquelle
A = reste de la série du benzène ou du naphtalène
B = un reste de la série du benzène qui est substitué en position para par rapport aux groupes azo,
C = reste d'un copulant phénolique ou énolique, notamment d'un tel composant de la série de l'hydroxybenzène, de l'hydroxynaphtalène, de la pyrazolone, de la pyridone, de la pyrimidone, de la quinolone ou des acétyl-acétarylides,
W = liaison simple ou terme de pontage relatif à un atome de carbone des noyaux de benzène ou de naphtalène A, B ou C ou à un atome de carbone d'un noyau aromatique-hétéro cyclique C,
$R_1$ = hydrogène ou groupe alkyle en $C_1$ à $C_4$, éventuellement substitué,
X = reste réactif envers la fibre ou H
Y = vinyle, β-halogénovinyle ou $-O-CH_2-CH_2-Z$ où Z est un groupe partant
k = 1 ou 2
l = 0 ou 1

p = 0 à 4
m = 0, 1, 2 ou 3
n = 0, 1, 2, 3 ou 4
Me = atome de métal divalent, notamment Cu et Ni.

2. Colorants suivant la revendication 1, de formule générale

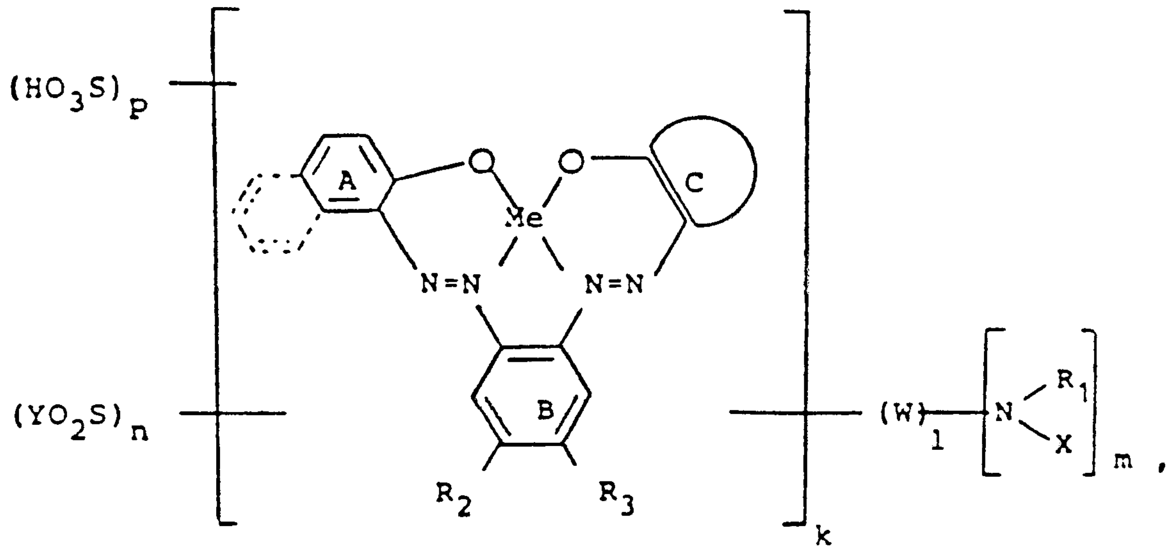

dans laquelle

A et C peuvent présenter le cas échéant d'autres substituants,

$R_2$ = alkyle en $C_1$ à $C_4$, halogène, notamment chlore, alkoxy en $C_1$ à $C_4$ (alkyle en $C_1$ à $C_4$)carbonylamino, arylcarbonylamino, aralkylcarbonylamino,

$R_3$ = alkoxy en $C_1$ à $C_4$,

ou bien

$R_2$ et $R_3$ forment un noyau et ont la définition suivante:

$$R_2 + R_3 = NH-CO-CH_2-O,$$

$$O-CH_2-CH_2-O$$

et

Y, C, W, $R_1$, X, k, l, m, n, p et Me ont la définition indiquée dans la revendication 1 et les restes alkyle, alkoxy, aryle et aralkyle peuvent présenter des substituants classiques.

3. Colorants suivant les revendications 1 et 2, dans lesquels
l, m, n, p = 0
k = 1,
qui sont dépourvus de groupes hydrosolubilisants.

4. Colorants suivant les revendications 1 et 2, dans lesquels
l, m, n, = 0
k = 1
p = 1 - 3

5. Colorants suivant les revendications 1 et 2, dans lesquels
l, m, p = 0
k = 1
n = 1 ou 2,
Y = $CH_2$-$CH_2Z$
Z = -O-$SO_3H$, -S-$SO_3H$, -O-$PO_3H_2$.

6. Colorants suivant les revendications 1 et 2, dans lesquels
m, n = 0
l = 1
k = 2 et
p = 2 à 8.

7. Colorants réactifs de formule générale

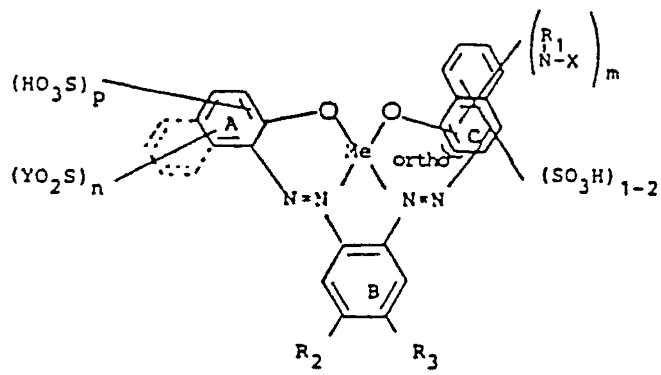

dans laquelle

Y, n, $R_2$, $R_3$, $R_1$, m, p et Me ont la définition indiquée dans la revendication 2 et

X est un reste réactif.

8. Colorant réactif suivant la revendication 7, dans lequel

$R_2$ et $R_3$ = alkoxy en $C_1$ à $C_4$

$R_1$ = H,

Y, n, X, m, Me ayant les définitions indiquées dans la revendication 7.

9. Colorants réactifs de formule

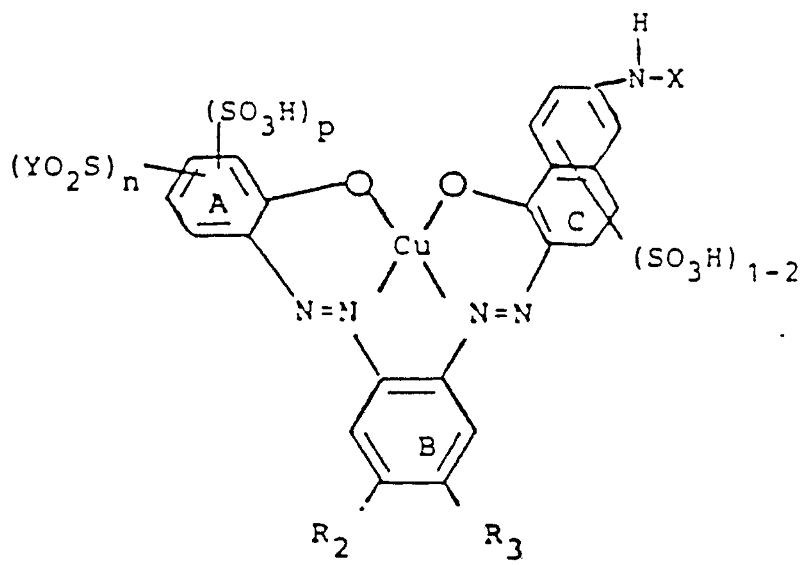

dans laquelle $R_2$, $R_3$, X, Y, n et p ont la définition mentionnée dans la revendication 1.

10. Utilisation de colorants suivant les revendications 1 à 9 pour la teinture et l'impression de matières naturelles ou synthétiques et portant notamment des groupes hydroxyle ou amide.

11. Matières naturelles ou synthétiques portant notamment les groupes hydroxyle ou amide, teintes ou imprimées avec les colorants suivant les revendications 1 à 9.